# FASCICULE DE BREVET EUROPEEN

(11) **EP 4 188 722 B1**
(45) Date de publication et mention de la délivrance du brevet: **06.11.2024**
(21) Numéro de dépôt: 21762750.4
(22) Date de dépôt: 28.07.2021
(51) Int. Cl.: B60C 11/24, G01M 17/02, B60C 19/00

(54) **PROCEDE D'ESTIMATION DE L'ETAT D'USURE D'UN PNEUMATIQUE**
VERFAHREN ZUR SCHÄTZUNG DES VERSCHLEISSZUSTANDS EINES REIFENS
METHOD FOR ESTIMATING THE STATE OF WEAR OF A TYRE

(30) Priorité: 03.08.2020 FR 2008233
(43) Date de publication de la demande: 07.06.2023
(73) Titulaire: COMPAGNIE GENERALE DES ETABLISSEMENTS MICHELIN, 63000 Clermont-Ferrand (FR)
(72) Inventeur: GUILLOU, Melaine, 63040 CLERMONT-FERRAND Cedex 9 (FR); MARDUEL, Xavier, 63040 CLERMONT-FERRAND Cedex 9 (FR)
(74) Mandataire: M.F.P. Michelin
(86) Numéro de dépôt international: PCT/FR2021/051408
(87) Numéro de publication internationale: WO 2022/029382

(56) Documents cités:
- WO-A1-2020/005346
- FR-A1- 3 015 036
- KR-A- 20200 083 026

## Description

### Domaine de l'invention

La présente invention concerne un procédé d'estimation de l'état d'usure d'un pneumatique équipant un véhicule se déplaçant sur une route, à partir du bruit généré par le pneumatique lorsque celui-ci est en contact dynamique avec le sol.

### Arrière-plan technologique

Il s'avère utile de connaître l'état d'usure du pneumatique pour interagir avec le conducteur ou les systèmes d'assistance à la conduite, de manière à les informer en temps réel de la modification des conditions d'adhérence du pneumatique et de la tenue de route du véhicule par la modification en particulier de l'état d'usure de celui-ci.

Ainsi, les demandes de brevet FR3015036A1 et WO2017103474A1 proposent une méthode qui cumule à la fois l'état d'usure du pneumatique et l'état du sol où roule le pneumatique. Cependant cette méthode qui est possible en condition embarqué sur véhicule met en oeuvre un grand nombre de paramètres à gérer par analyse discrimante. Ce nombre élevé de paramètres conduit à des temps de calculs et des ressources de calculs qui rendent cette méthode compliquée à mettre en oeuvre pour un coût de traitement acceptable quel que soit le type de véhicule automobile, et en particulier, les véhicules d'entrée de gamme. De plus, la robustesse de la méthode est affectée aussi par une prise en compte indirecte de l'influence de la vitesse de roulage lors du traitement de données.

L'un des objets de l'invention qui va suivre a pour objectif de proposer une méthode permettant de mettre en évidence l'évolution de l'état d'usure du pneumatique par une méthode autonome, c'est-à-dire sans intervention humaine et sans immobilisation du véhicule. De plus, la méthode doit être facile à mettre en oeuvre, avec des coûts et des temps de calculs réduits, pour faciliter le traitement en temps réel notamment lorsque le post traitement des données est effectué au niveau du véhicule.

### Description de l'invention

L'invention porte sur un procédé d'estimation de l'état d'usure d'un pneumatique d'un ensemble monté d'un véhicule roulant sur une surface d'une route comprenant les étapes suivantes :
- Enregistrer une mesure d'un signal vibroacoustique produit par le pneumatique roulant sur la surface de la route pendant une trame temporelle donnée ;
- Transformer le signal temporel en un signal fréquentiel sur un intervalle de fréquence donnée ;
- Segmenter l'intervalle de fréquence en au moins deux bandes de fréquence de largeur préalablement prédéterminée et associer à chaque au moins deux bandes de fréquence au moins une donnée représentative du signal fréquentiel dans ladite au moins une bande de fréquence, la au moins une donnée représentative issue de la mesure formant au moins une variable d'une matrice associée à ladite mesure ;
- Pronostiquer un état d'usure du pneumatique correspondant à la matrice associée à la mesure réalisée, à l'aide d'un apprentissage automatique des données fondée sur une base d'apprentissage formée d'un ensemble de matrices associées à des mesures enregistrées et réalisées selon les mêmes étapes que ci-dessus, dans des conditions de roulage connues selon des modalités représentant chacune un état d'usure du pneumatique ; et
- Déterminer l'état d'usure du pneumatique après un nombre N de pronostics identiques dans une série M de pronostics consécutifs.

On entend ici par le terme « signal vibroacoustique », tout signal vibratoire et ou acoustique pouvant être capté par un capteur par exemple de type microphone ou accéléromètre.

L'idée est d'utiliser un capteur ne modifiant peu la réponse du pneumatique roulant sur la surface d'une route lorsque celui-ci est monté sur un véhicule par l'intermédiaire d'une jante par exemple. La condition de roulage du pneumatique sur la route engendre une signature spécifique qu'elle soit vibratoire et/ ou acoustique dans un large spectre de fréquences. Le principe consiste à mesurer un signal temporel sur un temps court et de transformer ce dernier en un signal fréquentiel pour lequel l'information utile est plus accessible puisque répartie sur une large bande de fréquences. En supposant que le signal est pseudo périodique, il est facilement envisageable de transformer un petit échantillon temporel avec une certain échantillonnage en un spectre de fréquences large bande avec un pas fréquentiel donné. La fréquence d'échantillonnage conditionne la largeur du spectre fréquentiel. Une fois obtenue ce spectre, il convient de le séparer en une multitude de bandes de fréquences, chaque bande représentant une dimension de la matrice associée à la signature vibroacoustique. Ensuite, pour chaque bande, on identifie une ou plusieurs données représentatives du spectre fréquentiel sur la bande de fréquences. Ces données représentatives représentent la seconde dimension de la matrice. Ces données représentatives du spectre fréquentiel sont comprises dans le groupe comprenant, la moyenne, la médiane, la valeur maximale, la valeur minimale ou une combinaison de ces grandeurs du spectre fréquentiel. Ces données représentatives peuvent aussi être des grandeurs relatives à la forme de spectre sur la bande de fréquences qui se traduisent par les émergences sur une fréquence ou une bande de fréquences par rapport au niveau moyen sur la bande de fréquence. Le découpage en bande de fréquences pour la dimension de la matrice peut par exemple être réalisée par tiers d'octave.

Enfin, le pronostic de l'état d'usure du pneumatique est effectué par un apprentissage automatique basé sur des matrices construites sur le modèle de celles obtenues à l'aide de la matrice constituée à l'étape précédente lors d'une campagne d'apprentissage. Au cours de cette campagne d'apprentissage, divers roulages de pneumatiques ont été réalisées au cours desquels une mesure vibroacoustique a été enregistrée puis analysée selon le même protocole pour chaque roulage. Chaque roulage a été effectué sur un véhicule spécifique avec une monte de pneumatiques connue dont notamment le niveau d'usure du pneumatique selon des conditions variées de pression et de charge statique appliquée autour des conditions nominales. Chaque roulage a consisté à faire rouler le véhicule sur une route dont la nature macrorugueuse était prédéterminée, l'état météorologique de la route était identifié. A cet effet, l'état d'usure du pneumatique était scindé en au moins deux groupe dit neuf ou usé selon la hauteur de la bande de roulement du pneumatique. Lorsque la hauteur de la bande de roulement pour un pneumatique monté gonflé sur jante, compris entre la hauteur radialement extérieure à l'état neuf de la bande de roulement, dite hauteur maximale, et la hauteur minimale correspondant à la distance radialement extérieure du témoin d'usure au fond des sillons de la bande roulement, se situe entre la hauteur maximale et la mi-hauteur maximale qui est à égale distance de la hauteur maximale et la hauteur minimale, l'état du pneumatique est dit « neuf » et inversement, il est dit « usé ». On peut aussi séparer l'état d'usure en une multitude de classes de taille identique. Par exemple, si on veut qualifier l'état d'usure du pneumatique entre l'état « neuf », «mi- usé » et « usé », les bornes de séparation entre ces divers états sont réciproquement les deux tiers de la différence entre la hauteur maximale et la hauteur minimale et le tiers de la différence des hauteurs. Ainsi chaque classe ou groupe est répartie sur une bande de hauteurs de la bande de roulement semblable.

Ici, la multitude des mesures et des pronostics de l'état d'usure du pneumatique permet statistiquement d'évaluer rapidement la classe d'usure du pneumatique au travers d'un modèle simple. Ce modèle mathématique simple nécessite qu'une faible base d'apprentissage et engendre un temps de réponse très rapide. Ainsi, on fait l'hypothèse que les occurrences N du même pronostic dans une série de M mesures, par exemple quelle que soit, par exemple, l'état météorologique de la route, la nature macrorugeuse de la route ou la vitesse de roulage permettra de détecter le passage d'une classe d'usure du pneumatique à l'autre. En fait, l'état d'usure du pneumatique évolue lentement dans le domaine temporel par rapport aux autres grandeurs sensibles du système. Il en va de même pour les conditions d'usage du pneumatique au travers des paramètres comme la pression ou la charge statique appliquée. Bien entendu, la série de mesures M sera dictée par la diversité des conditions de mesures et le nombre d'occurrences N sera piloté par la précision du pronostic dans lesdites conditions de mesures. Ainsi contrairement au modèle du document de l'état de l'art, on choisit de multiplier les mesures sur un modèle élémentaire pour prédire, par redondance d'informations, l'état du pneumatique qui par nature évolue lentement. La simplicité du modèle permet des temps de réponse rapides et des post traitements en embarqué sur le véhicule. La prédiction gagne aussi en robustesse en ne mettant pas sous contrôle un ensemble trop vaste de paramètres sensibles de la signature vibroacoustique du pneumatique.

Préférentiellement, le procédé comprend l'étape suivante :
- Déterminer une classe de vitesse de roulage du pneumatique dont la largeur est une fraction d'une vitesse de roulage maximale, préférentiellement la vitesse de roulage maximale est de 300 km/h ; et dans lequel la classe de vitesse de roulage est une modalité de l'apprentissage automatique.

Dans ce cas particulier on ajoute comme modalité de la base d'apprentissage la classe de vitesses de roulage. Cela permet de prédire plus rapidement l'état d'usure du pneumatique puisque la vitesse de roulage influence largement la réponse vibroacoustique du pneumatique roulant notamment au niveau du niveau moyen mesuré sur une large fenêtre fréquentielle. Cette influence se traduit notamment par une augmentation de la réponse vibroacoustique du pneumatique proportionnelle à la vitesse de roulage. La sensibilité des données représentatives peut s'atténuer ou disparaître dans la réponse vibroacoustique pilotée par le niveau moyen. Ainsi, la sensibilité des données représentatives du signal fréquentiel est renforcée en prenant en compte comme modalité la vitesse de roulage, ce qui permet une amélioration de la prédiction de l'état d'usure du pneumatique. La vitesse peut être évaluée par des données issues du véhicule comme l'information d'un GPS (acronyme en anglais de Global Positioninng system) ou une information transitant sur le CANbus du véhicule ou une information contenue directement ou indirectement au travers de systèmes électroniques montés sur le pneumatique comme un TMS (acronyme de Tire Mounted Sensor) ou TPMS (acronyme en anglais de Tire Pressure Monitoring System) ou par tout autre moyen. Pour la simplicité du système et en raison de la sensibilité de la réponse vibroscoustique du pneumatique, une classification de la vitesse par classe de vitesses est suffisante, préférentiellement une largeur de classe de vitesse d'une dizaine de km/h est un bon compromis entre la rapidité d'évaluation souhaitée ramenée à la taille de la base d'apprentissage et la précision recherchée sur l'état d'usure du pneumatique. Cela réduit la base d'apprentissage pour la prédiction sans trop impacter la précision. De plus, l'évolution de l'état d'usure du pneumatique est lente. De ce fait, la redondance de l'information de l'état d'usure conduit à statistiquement déterminer à partir d'un certain nombre M de mesures vibroacoustique l'état d'usure du pneumatique. L'ajout de la vitesse de roulage ou de la classe de vitesse de roulage rend le processus plus efficace en nombre de mesures vibroscoustiques pour converger vers la bonne information de l'état d'usure du pneumatique.

Selon un mode de réalisation préférentiel, la détermination de la vitesse de roulage du véhicule comprend les étapes suivantes :
- Enregistrer une seconde mesure d'un signal vibroacoustique produit par le pneumatique roulant sur la surface de la route pendant une seconde trame temporelle donnée ;
- Transformer le second signal temporel en un second signal fréquentiel sur un second intervalle de fréquence donnée ;
- Segmenter le second intervalle de fréquence en au moins deux bandes de fréquence de largeur préalablement prédéterminée et associer à chaque au moins deux bandes de fréquence au moins une donnée représentative du second signal fréquentiel dans ladite au moins une bande de fréquence, la au moins une donnée représentative issue de la seconde mesure formant au moins une variable d'une matrice associée à ladite seconde mesure ;
- Déterminer une classe de vitesse de roulage du pneumatique correspondant à la matrice associée à la seconde mesure réalisée, à l'aide d'un second apprentissage automatique des données fondée sur une base d'apprentissage formée d'un ensemble de matrices associées à des mesures enregistrées et réalisées selon les mêmes étapes que ci-dessus, dans des conditions de roulage connues selon des modalités représentant chacune à une classe de vitesse de roulage du pneumatique.

L'évaluation de la vitesse de roulage peut être réalisée au travers d'une mesure vibroacoustique du pneumatique roulant sur la surface d'une route. Pour cela, l'emploi d'un second apprentissage automatique construit sur une base d'apprentissage prenant en compte comme modalité que la vitesse de roulage ou des classes de vitesses de roulage est préconisée. En effet, la réponse vibroacoustique du pneumatique dépend de l'état d'usure du pneumatique mais aussi d'autres paramètres. Cependant, la vitesse de roulage influence l'ensemble du spectre fréquentiel du pneumatique et non seulement certaines bandes de fréquences spécifiques ou du moins ces bandes ne sont pas toutes identiques selon les paramètres observés. Ainsi, les données représentatives de la matrice de signature vibroacoustique liée à la vitesse de roulage est différente de celle de l'état d'usure du pneumatique. Par conséquent, il est possible par un apprentissage automatique spécifique d'identifier la vitesse de roulage ou la classe de vitesse de roulage correspondant à une mesure vibroacoustique du pneumatique en découpant le signal fréquentiel en bandes de fréquences spécifiques et en évaluant des données représentatives particulières sur chaque bande de fréquences. Ce découpage fréquentiel et ses données représentatives sont par nature différents de ceux associés à la matrice d'identification de l'état d'usure du pneumatique. Bien entendu, cette seconde mesure vibroacoustique peut être différente de la mesure vibroacoustique de l'état d'usure. Cependant rien n'empêche d'utiliser la même mesure pour les deux apprentissages automatiques. Dans ce mode de réalisation particulier, il est nécessaire d'identifier la vitesse de roulage ou la classe de vitesse de roulage avant de déterminer l'état d'usure du pneumatique, ce qui impose l'ordre des post traitements. Enfin, le découpage de la vitesse de roulage en diverses classe de vitesse permet de limiter le nombre de modalités, ce qui rend plus efficace la méthode aussi bien au niveau de la taille de la base d'apprentissage que du temps de réponse du post traitement. Contrairement au document de l'état de la technique, il est possible au niveau de l'évaluation de la vitesse de roulage de prendre en compte une série de données représentatives, contrairement à la seule donnée correspondant à la puissance moyenne sur une bande de fréquence donnée, ce qui rend plus robuste cette méthode en termes de précision et de robustesse. Ainsi, on réduit significativement le nombre de mesures nécessaire pour prédire statiquement l'état d'usure du pneumatique.

Selon l'invention, le procédé comprend les étapes complémentaires :
- Déterminer une classe d'état de surface du sol ; et dans lequel la classe d'état de surface du sol est une condition de réalisation du pronostic de l'état d'usure du pneumatique si celle-ci est une classe d'état du sol spécifique.

Ici, la classe d'état de surface du sol devient une condition de réalisation de l'étape de pronostic de l'état d'usure du pneumatique. Dans le premier cas, on ajoute les classes d'état de surface du sol comme modalité. Cela a pour avantage d'accélérer statistiquement la prédiction de l'état d'usure du pneumatique en réduisant le nombre de mesure M à effectuer pour converger vers l'information utile. Pour autant, la base d'apprentissage devient plus conséquente puisque ces nouvelles modalités augmentent le nombre de combinaisons entre les modalités. Ainsi, on augmente la taille de la base d'apprentissage et on complexifie le modèle mathématique associé à l'état d'usure du pneumatique. Dans la second cas, l'inventeur a constaté que lorsque la classe d'état de surface du sol est une classe d'état du sol spécifique, la détermination de l'état d'usure du pneumatique n'a pas besoin de connaître la classe d'état de surface du sol pour converger rapidement vers la solution. Ainsi, la classe d'état du sol devient juste un indicateur pour lancer le pronostic de l'état d'usure du pneumatique. Ce second cas permet de limiter la taille de la base d'apprentissage et du modèle mathématique de l'état d'usure du pneumatique. Cependant, on réduit le nombre de mesure éligible au pronostic aux seules mesures où la condition sur la classe d'état du sol spécifique est obtenue. Ceci n'est pas pénalisant dans le cas de l'état d'usure du pneumatique qui est un paramètre qui évolue lentement dans le temps. Bien entendu, il est nécessaire que la détermination de la classe d'état de surface du sol soit effectuée avant l'étape de pronostic de l'état d'usure du pneumatique. Il est tout à fait possible, mais non indispensable, de combiner l'utilisation de la classe d'état de surface du sol avec l'utilisation de la classe de vitesse de roulage pour réduire encore le nombre de mesures nécessaires pour converger vers l'information sur l'état d'usure du pneumatique. Enfin cet état de la surface de la route peut être obtenu par l'intermédiaire d'une information météorologique liée à une cartographie associée à la position GPS du véhicule ou par tout autre moyen sur véhicule comme un capteur de pluie, un actionneur d'essuie-glace, etc...

Spécifiquement la classe d'état de surface du sol est compris dans le groupe comprenant sec, humide, mouillé, enneigé et glacé.

L'état du sol correspond à l'état météorologique du sol. L'état météorologique est compris dans le groupe comprenant : un état sec, un état humide et un état mouillé ou un état hivernal tel qu'un état de neige ou de glace. Un état de neige peut, dans un mode de réalisation préférentiel, être compris dans le groupe comprenant un état neige fraîche, un état neige compacte, un état neige granuleuse et un état neige fondue.

Un état humide est caractérisé par une hauteur d'eau affleurant les rugosités naturelles du revêtement de la route. Cet état humide correspond par exemple à l'état du sol obtenu par une petite pluie ou une route qui s'assèche après une forte pluie. Un état mouillé, quant à lui, est caractérisé par une hauteur d'eau dépassant le niveau des rugosités naturelles du revêtement de la route. En pratique, l'état mouillé correspond à une hauteur d'eau généralement comprise entre 0,5 millimètres et 1 millimètre.

L'état météorologique du sol peut être déterminée par les prévisions météorologiques associées à la position GPS du véhicule, à la réponse de capteurs sur le véhicule comme l'actionnement des essuis glaces ou un capteur de détection de pluie sur le parebrise. Enfin, en associant la température ambiante du milieu dans lequel se déplace le véhicule, il est possible d'identifier la présence ou la formation de neige associée à un état hivernal.

Selon l'invention, la classe d'état du sol spécifique comprend la classe d'état de surface du sol dit « sec ».

Parmi les états météorologiques spécifiques, ce qui permet de ne pas prendre la classe d'état du sol en tant que modalité de l'apprentissage automatique lié à l'état d'usure du pneumatique, on notera l'état de surface du sol dit sec pour lequel le contact entre le pneumatique et le sol n'est pas impacté par la présence d'eau quelle que soit sa forme et quelle que soit sa quantité. L'inventeur a constaté que la classe d'état du sol spécifique pouvait mixer aussi les sols des classes d'état de surface du sol dit « humide » et « sec » sans nuire au pronotic sur l'état d'usure du pneumatique par l'apprentissage automatique bien que la restriction à la seule classe d'état de surface du sol dit « sec » améliore la probabilité du pronostic. Mais, il faut préférablement éviter la classe d'état de surface du sol dit « mouillé ».

Cet état spécifique permet de sélectionner les mesures vibroacoustiques faites par temps sec, quelle que soit la température ambiante, ce qui permet de limiter le nombre de mesures exploitées pour pronostiquer l'état d'usure du pneumatique, ce qui rend plus efficace la méthode. En effet, la présence d'eau modifie une partie du spectre fréquentiel obtenu par rapport à celui obtenu à l'aide d'une mesure vibroacoustique par temps sec, ce qui créé naturellement de la dispersion dans les spectres fréquentiels et impacte inéluctablement la qualité du pronostic.

Selon un second mode de réalisation, la détermination de la classe d'état de surface su sol comprend les étapes additionnelles :
- Enregistrer une troisième mesure d'un signal vibroacoustique produit par le pneumatique roulant sur la surface de la route pendant une troisième trame temporelle donnée ;
- Transformer le troisième signal temporel en un troisième signal fréquentiel sur un troisième intervalle de fréquence donnée ;
- Segmenter le troisième intervalle de fréquence en au moins deux bandes de fréquence de largeur préalablement prédéterminée et associer à chaque au moins deux bandes de fréquence au moins une donnée représentative du troisième signal fréquentiel dans ladite au moins une bande de fréquence, la au moins une donnée représentative issue de la troisième mesure formant au moins une variable d'une matrice associée à ladite troisième mesure ;
- Déterminer une classe d'état de surface du sol correspondant à la matrice associée à la troisième mesure réalisée, à l'aide d'un troisième apprentissage automatique des données fondée sur une base d'apprentissage formée d'un ensemble de matrices associées à des mesures enregistrées et réalisées selon les mêmes étapes que ci-dessus, dans des conditions de roulage connues selon des modalités représentant chacune au moins une classe d'état de surface du sol.

L'évaluation de l'état météorologique de la surface de la route peut être réalisée au travers d'une mesure vibroacoustique du pneumatique roulant sur la surface d'une route. Pour cela, l'emploi d'un troisième apprentissage automatique construit sur une base d'apprentissage prenant en compte comme modalité la classe d'état du sol. De plus, on peut aussi prendre en compte la classe de vitesse de roulage comme modalité de ce troisième apprentissage automatique ou comme condition de réalisation de la détermination de l'état de la surface du sol afin de réduire la base d'apprentissage de ce troisième apprentissage automatique, ce qui rend plus performant l'identification de la classe d'état météorologique de la surface de la route. En effet, la réponse vibroacoustique du pneumatique dépend de l'état d'usure du pneumatique mais aussi d'autres paramètres comme la vitesse de roulage. Cependant, la vitesse de roulage influence l'ensemble du spectre fréquentiel du pneumatique et non seulement certaines bandes de fréquences spécifiques ou du moins ces bandes ne sont pas toutes identiques selon les paramètres observés. Ainsi, les données représentatives de la matrice de signature vibroacoustique liée à l'état météorologique de la route est différente de celle de l'état d'usure du pneumatique. Par conséquent, il est possible par un apprentissage automatique spécifique d'identifier la classe associée à l'état météorologique de la route correspondant à une mesure vibroacoustique du pneumatique en découpant le signal fréquentiel en bandes de fréquences spécifiques et en évaluant des données représentatives particulières sur chaque bande de fréquences. Ce découpage fréquentiel et ses données représentatives sont par nature différents de ceux associés à la matrice d'identification de l'état d'usure du pneumatique et de la vitesse de roulage. Cependant, ayant préalablement identifié la classe de vitesse de roulage, il est possible de prendre en compte ce paramètre pour réduire la base d'apprentissage de ce troisième apprentissage automatique, ce qui rend la méthode plus performante. Bien entendu, cette troisième mesure vibroacoustique peut être différente de la mesure vibroacoustique de l'état d'usure et de la mesure vibroacoustique de la classe de vitesse de roulage. Cependant rien n'empêche d'utiliser la même mesure vibroacoustique que l'une ou l'autre des mesures associées respectivement aux deux autres apprentissages automatiques, ce qui réduit le nombre d'étapes à effectuer.

Dans ce mode de réalisation particulier, il est nécessaire d'identifier la classe d'état de surface du sol avant de déterminer l'état d'usure du pneumatique, ce qui impose un certain ordre des post traitements. En revanche, il est obligatoire d'effectuer le post traitement de la mesure vibroacoustique associée à la classe d'état du sol après le post traitement de la mesure vibroacoustique de la classe de vitesse de roulage pour prendre en compte ce paramètre dans le troisième apprentissage automatique.

Selon l'invention, le procédé comprend les étapes complémentaires :
- Déterminer une classe de nature du sol ; et dans lequel la classe de nature du sol est une condition de réalisation du pronostic de l'état d'usure du pneumatique si celle-ci est une classe de nature du sol spécifique.

Ici, la classe de nature du sol devient une condition de réalisation de l'étape de pronostic de l'état d'usure du pneumatique. Dans le premier cas, on ajoute comme modalité la classe de nature du sol. Cela a pour avantage d'accélérer statistiquement la prédiction de l'état d'usure du pneumatique en réduisant le nombre de mesures à effectuer pour converger vers l'information utile. Pour autant, la base d'apprentissage devient plus conséquente puisque ces nouvelles modalités augmentent le nombre de combinaisons entre les modalités. Ainsi, on augmente la taille de la base d'apprentissage et on complexifie le modèle mathématique associé à l'état d'usure du pneumatique. Dans la second cas, l'inventeur a constaté que lorsque la classe de nature du sol est une classe de nature du sol spécifique, la détermination de l'état d'usure du pneumatique n'a pas besoin de connaître la classe de nature du sol pour converger rapidement vers la solution. Ainsi, la classe de nature du sol devient juste un indicateur pour lancer le pronostic de l'état d'usure du pneumatique. Ce second cas permet de limiter la taille de la base d'apprentissage et du modèle mathématique de l'état d'usure du pneumatique. Cependant, on réduit le nombre de mesures éligible au pronostic aux seules meures où la condition sur la classe de nature du sol spécifique est obtenue. Ceci n'est pas pénalisant dans le cas de l'état d'usure du pneumatique qui est un paramètre qui évolue lentement dans le temps. Bien entendu, il est nécessaire que la détermination de la classe de nature du sol soit effectuée avant l'étape de détermination de l'état d'usure du pneumatique. Il est tout à fait possible, mais non indispensable, de combiner l'utilisation de la classe de nature du sol avec la classe de vitesse de roulage ou la classe d'état de surface du sol pour réduire encore le nombre de mesures utiles pour converger vers l'information sur l'état d'usure du pneumatique. Enfin cette classe de nature du sol peut être obtenue par l'intermédiaire d'une cartographie des sols associée à la position GPS du véhicule ou par tout autre moyen comme des moyens optiques et/ou lumineux et/ou sonores embarqués sur véhicule.

Spécifiquement, la classe de nature du sol est comprise dans le groupe comprenant « ouvert », « médium » et « fermé ».

Un revêtement est qualifié de « fermé » ou « macrolisse » lorsqu'il prend un aspect lisse et sans rugosités, comme par exemple un bitume ayant ressué après avoir subi de fortes chaleurs ou une plaque de béton recouvert d'une couche de ciment. Un revêtement sera considéré comme « ouvert » ou 'macrorugueux » lorsque les rugosités sont importantes, par exemple comme celles d'un revêtement usé ou celui d'une route de campagne réparée rapidement à l'aide d'un enduit superficiel réalisé par projection de cailloux sur du bitume. Un revêtement « médium » décrit tous les revêtements dans un état intermédiaire entre les deux états précédents et qualifie plus particulièrement les revêtements neufs.

La macro-texture d'un revêtement joue sur les propriétés de drainabilité de la route mais aussi sur les propriétés acoustiques du pneumatique. Cette texture est caractérisée par une « Profondeur Moyenne de Texture », également appelée « PMT ». Cette PMT est mesurée par la hauteur au sable vrai, également notée HSv, bien connue de l'homme du métier.

On peut ainsi catégoriser les différentes macro-textures de la façon suivante : un revêtement à macro-texture fermée présente une PMT comprise entre 0 et 0.4 millimètres. Un revêtement à macro-texture médium présente une PMT entre 0.4 et 1.1 millimètres, et un revêtement à macro-texture ouverte présente une PMT supérieure à 1.1 millimètres.

Selon l'invention, la classe de nature du sol spécifique comprend la classe de nature du sol dit « ouvert ».

Parmi les classes de nature du sol spécifiques, ce qui permet de ne pas prendre la nature du sol en tant que modalité de l'apprentissage automatique lié à l'état d'usure du pneumatique, on notera la classe de nature du sol caractérisée par une macrotexture dite « ouvert ». En effet, l'inventeur a constaté que pour ces natures du sol, le spectre en fréquences était spécifique mettant en exergue plus facilement des émergences spectrales significatives des diverses modalités autre que celles associées à la classe de nature du sol.

De plus, cette classe de nature du sol spécifique permet de sélectionner les mesures vibroacoustiques faites sur sol de macrotexture plutôt ouverte, ce qui permet de limiter le nombre de mesures éligibles au pronostic de l'état d'usure du pneumatique, ce qui rend plus efficace la méthode.

La classe de nature du sol spécifique pourrait inclure les sols dont la PMT est supérieure à 0,7, préférentiellement supérieure à 0,9, très préférentiellement supérieure à 1.0.

En effet, l'inventeur a constaté que la méthode pouvait être aussi efficace en prenant des sols sont la PMT était inférieure à 1,1, ce qui revient à des sols dits « médium ». Cependant, seule la gamme haute de PMT au sein des sols dits « médium » permet une mise en oeuvre efficace de la méthode comme lorsque la PMT est supérieure à 0,7. Bien entendu, plus la PMT est élevée et se rapproche de la borne des sols dits « ouvert », plus la méthode est robuste.

Selon un troisième mode de réalisation, la détermination de la classe de nature du sol comprend les étapes additionnelles :
- Enregistrer une quatrième mesure d'un signal vibroacoustique produit par le pneumatique roulant sur la surface de la route pendant une quatrième trame temporelle donnée ;
- Transformer le quatrième signal temporel en un quatrième signal fréquentiel sur un quatrième intervalle de fréquence donnée ;
- Segmenter le quatrième intervalle de fréquence en au moins deux bandes de fréquence de largeur préalablement prédéterminée et associer à chaque au moins deux bandes de fréquence au moins une donnée représentative du quatrième signal fréquentiel dans ladite au moins une bande de fréquence, la au moins une donnée représentative issue de la quatrième mesure formant au moins une variable d'une matrice associée à ladite quatrième mesure ;
- Déterminer la classe de nature du sol correspondant à la matrice associée à la quatrième mesure réalisée, à l'aide d'un quatrième apprentissage automatique des données fondée sur une base d'apprentissage formée d'un ensemble de matrices associées à des mesures enregistrées et réalisées selon les mêmes étapes que ci-dessus, dans des conditions de roulage connues selon des modalités représentant chacune au moins une classe de nature de sol.

La nature de la surface de la route peut être réalisée au travers d'une mesure vibroacoustique du pneumatique roulant sur la surface d'une route. Pour cela, l'emploi d'un quatrième apprentissage automatique construit sur une base d'apprentissage prenant en compte comme modalité les classes de nature du sol est préconisé. En effet, la réponse vibroacoustique du pneumatique dépend de l'état d'usure du pneumatique mais aussi d'autres paramètres comme la vitesse de roulage, l'état météorologique du sol. Cependant, la vitesse de roulage influence l'ensemble du spectre fréquentiel du pneumatique et non seulement certaines bandes de fréquences spécifiques ou du moins ces bandes ne sont pas toutes identiques selon les paramètres observés. Ainsi, les données représentatives de la matrice de signature vibroacoustique liée à la nature du sol est différente de celle de l'état d'usure du pneumatique ou de celle de la vitesse de roulage ou de celle de l'état météorologique du sol. Par conséquent, il est possible par un apprentissage automatique spécifique d'identifier la nature du sol ou la classe de nature du sol correspondant à une mesure vibroacoustique du pneumatique en découpant le signal fréquentiel en bandes de fréquences spécifiques et en évaluant des données représentatives particulières sur chaque bande de fréquences. Ce découpage fréquentiel et ses données représentatives sont par nature différents de ceux associés à la matrice d'identification de l'état d'usure du pneumatique, de ceux associée à la matrice liée à la vitesse de roulage et de ceux associée à la matrice liée à l'état météorologique du sol. Cependant, ayant préalablement identifié la classe de vitesse de roulage, il est possible de prendre en compte ce paramètre pour réduire la base d'apprentissage de ce quatrième apprentissage automatique, ce qui rend la méthode plus performante. Bien entendu, cette quatrième mesure vibroacoustique peut être différente de la mesure vibroacoustique de l'état d'usure, de la mesure vibroacoustique de la vitesse de roulage et de la mesure vibroacoustique de l'état météorologique du sol. Cependant rien n'empêche d'utiliser la même mesure vibroacoustique que l'une ou l'autre des trois autres mesures vibroacoustiques associées respectivement aux trois autres apprentissages automatiques, ce qui réduit le nombre d'étapes à effectuer.

Dans ce mode de réalisation particulier, il est nécessaire d'identifier la classe de nature du sol avant de déterminer l'état d'usure du pneumatique, ce qui impose un certain ordre des post-traitements. En revanche, il est possible d'effectuer le post-traitement de la mesure vibroacoustiqueé associée à la classe de nature du sol avant ou après le post traitement de la mesure vibroacoustique de la classe d'état météorologique du sol. Et il peut devenir obligatoire d'effectuer le post traitement de la mesure vibroacoustique associée à la classe de nature du sol après le post traitement de la mesure vibroacoustique de la classe de vitesse de roulage pour prendre en compte ce paramètre dans le quatrième apprentissage automatique.

Optionnellement, l'étape de détermination de la classe de nature du sol comprend la classe d'état de surface du sol comme modalité du quatrième apprentissage automatique.

L'inventeur a constaté que le fait de positionner la détermination de l'état météorologique du sol avant la détermination de la nature du sol permet de prendre en compte l'état météorologique du sol comme une modalité da quatrième apprentissage automatique associée à la nature du sol, ce qui permet d'améliorer le pronostic associé à ce quatrième apprentissage automatique. Ceci rend plus performant la détermination de la nature du sol en réduisant le nombre de mesures vibroacoustiques à analyser pour identifier la nature du sol.

Avantageusement au moins l'un des apprentissages automatiques sont compris dans le groupe comprenant les réseaux de neurones, l'analyse discriminante, les machines à vecteur de support, le boosting, les méthodes des k plus proches voisins et la régression logistique.

Les méthodes d'apprentissage automatique sont multiples et chacune présentes des avantages et des inconvénients. La liste présentée n'est pas exhaustive et la méthode ne serait se limiter à ces exemples concrets d'apprentissage automatique.

Avantageusement, la transformation d'un signal temporel en un signal fréquentiel s'effectue à l'aide de la Densité Spectrale de Puissance.

L'inventeur a constaté que l'utilisation de la Densité Spectrale de Puissance pour transformer le signal temporel et un signal fréquentiel présente les avantages bien connus de conservation de l'énergie du signal tout en réduisant les paramètres du signal fréquentiel à une grandeur, l'amplitude, en faisant disparaître la notion de phase.

Préférentiellement, l'état d'usure du pneumatique est compris dans le groupe comprenant neuf et usé, préférentiellement aussi mi- usé.

Afin de rendre la méthode performante, il convient de définir au moins deux états d'usure du pneumatique ce qui permet d'ajuster les paramètres du véhicule selon un mode binaire. Ainsi, la vie du pneumatique est scindée en deux périodes un état neuf et un état usé pour lesquels le comportement du pneumatique passe d'un premier état à un second état, ce qui justifie d'adapter les dispositifs de sécurité, par exemple, le dispositif ABS (acronyme de Anti Blocking System) selon chacun de ces deux états. Bien entendu, il est tout à fait possible de scinder la vie du pneumatique en un nombre plus conséquent d'états du pneumatique. Il est conseillé alors que ces états correspondent tous à une même variation de hauteur de bande de roulement. Cependant, plus on découpe la bande de roulement du pneumatique, plus la méthode est lourde, l'inventeur a constaté que la meilleur compromis performance/efficacité de la méthode était de scinder la bande de roulement du pneumatique en trois états : usé, mi- usé et neuf.

### Description brève des dessins

L'invention sera mieux comprise à la lecture de la description qui va suivre donnée uniquement à titre d'exemple non limitatif et faite en se référant aux figures annexées dans lesquelles les mêmes numéros de référence désignent partout des parties identiques et dans lesquelles :
- La figure 1 présente un synoptique générale du procédé d'estimation de l'état d'usure d'un pneumatique selon l'invention ;
- La figure 2 présente représente un véhicule équipé d'un dispositif de mesure permettant la détermination d'un état d'usure du pneumatique ;
- La figure 3 représente un espace discriminant selon deux axes principaux du procédé d'estimation de l'état d'usure du pneumatique prenant en compte que les modalités de l'état d'usure du pneumatique selon l'invention ;
- La figure 4 représente des spectres de bruit mesurés sur véhicule roulant sur une route dont l'état et la nature de la surface du sol sont connus ;
- La figure 5 représente un espace discriminant selon un axe principal du procédé de détermination de la classe d'état de surface du sol prenant en compte que la modalité liée à l'état de surface du sol selon l'invention ;
- La figure 6 représente un espace discriminant selon deux axes principaux du procédé d'estimation de l'état d'usure du pneumatique prenant en compte les modalités de l'état d'usure du pneumatique et les classes de vitesse de roulage pour une classe d'état du sol spécifique, l'état dit « sec », selon l'invention ;
- La figure 7 représente un espace discriminant selon deux axes principaux du procédé de détermination de la classe de nature du sol selon l'invention ;
- La figure 8 représente un espace discriminant selon deux axes principaux du procédé d'estimation de l'état d'usure du pneumatique en sélectionnant les mesures selon les critères de classe d'état du sol spécifique et de classe de nature du sol spécifique.

### Description détaillée de modes de réalisation

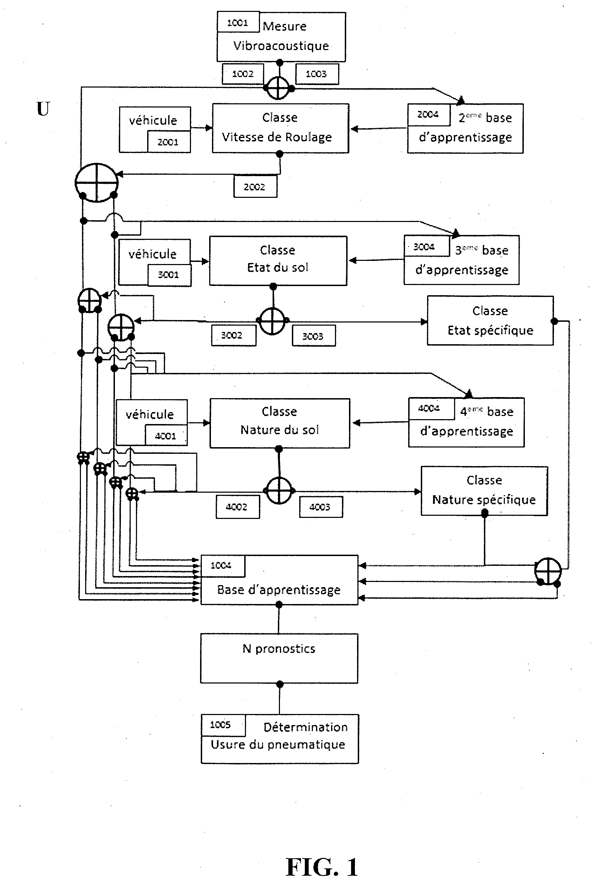

La figure 1 présente un synoptique complet du procédé d'estimation de l'état d'usure d'un pneumatique à l'aide d'une mesure vibroacoustique 1001 réalisée sur véhicule au cours d'un roulage selon plusieurs modes de réalisation.

Cette mesure 1001 temporelle est transformée en un spectre fréquentiel 1002 par des outils standards de calcul comme la transformée de Fourier rapide (en anglais « Fast Fourier Transform).

Le spectre fréquentiel 1002 est ensuite découpé en différentes bandes de fréquences selon l'utilisation choisie. Sur chaque bande de fréquences, on associe au spectre fréquentiel une ou plusieurs grandeurs physiques du spectre fréquentiel réduit sur la bande de fréquence. L'ensemble des grandeurs constitue un vecteur dont la longueur est proportionnelle au nombre de grandeurs physiques calculées Cela permet de remplir une matrice 1003 dont l'une des dimensions est le nombre de bandes de fréquences obtenues à partir de la largeur complète du spectre fréquentiel. La seconde dimension de la matrices 1003 correspond au nombre maximal de grandeurs physiques évaluées par bande de fréquence sélectionnée. Généralement, la matrice est un vecteur dont la longueur est le nombre de bandes de fréquence sélectionnées et la seconde dimension est un scalaire. Cela peut aussi être une matrice bidimensionnelle ou la seconde dimension est un vecteur.

Dans un premier mode de réalisation, la matrice 1003 est injectée dans un apprentissage automatique 1004 comprenant une base d'apprentissage. La base d'apprentissage a été constituée lors d'une étape préalable d'apprentissage par une succession de mesures vibroacoustiques et de traitements fréquentiels sur la mesure temporelle où les modalités de la base d'apprentissage étaient maîtrisées. Dans un mode classique, les modalités sont les classes d'état d'usure du pneumatique comprenant au moins l'état usé et l'état neuf, préférentiellement aussi l'état mi- usé. L'apprentissage automatique délivre un pronostic sur l'état d'usure du pneumatique.

La répétition des mesures, des post-traitements et des pronostics permet de constituer une série M de résultats de pronostic. La répétition d'un même résultat régulièrement dans la série permet de valider le changement d'état d'usure du pneumatique. De plus, généralement, l'état d'usure initial du pneumatique est l'état neuf qui se transforme au fil du temps et de ce fait de la série de pronostic vers l'état mi- usé puis l'état usé. Ainsi, la redondance des résultats de pronostic sur un même état d'usure sachant que le changement d'état d'sure ne peut se faire que dans un seul sens en général permet de rapidement déterminer l'état d'usure réel du pneumatique sous forme de classe d'état d'usure. Plus le nombre de classes d'usure est élevé, de ce fait une plus grande finesse dans la détermination de l'état d'usure du pneumatique, moins la méthode est performante puisque la qualité du résultat du pronostic sera affectée par l'ensemble des paramètres influents autres que l'état d'usure du pneumatique. On peut citer par exemple la vitesse de roulage, la nature du sol, l'état météorologique du sol mais aussi, le véhicule, les conditions d'usage du pneumatique en matière de pression, de charge appliquée, de température externe etc...

Selon un second mode de réalisation, afin de robustifier le procédé d'estimation de l'état d'usure du pneumatique, le pronostic par l'apprentissage automatique 1004 peut prendre en compte aussi la vitesse de roulage du pneumatique 2001. En effet, ce paramètre influence grandement le niveau moyen du spectre fréquentiel 1002 obtenu à partir de la mesure vibroacoustique temporelle 1001. Prendre en compte ce paramètre sous la forme de classes de vitesse de roulage comme modalité de l'apprentissage automatique permet de réduire les pronostics à tort.

Cette vitesse de roulage du pneumatique peut être obtenue par des capteurs additionnelles du véhicule ou obtenue au travers des informations transitant par le câblage électronique du véhicule. Cette détermination peut être directement faite sous forme de classes ou rangé sous forme de classes de vitesse de roulage souhaitée par l'apprentissage automatique. Cependant, dans une variante, la détermination de la classe de vitesse de roulage 2002 est déterminée à l'aide d'une seconde mesure vibroacoustique 1001 obtenue sur le véhicule. Cette seconde mesure vibroacoustique 1001 est avantageusement la mesure vibroacoustique 1001 qui servira au pronostic de l'état d'usure du pneumatique à l'étape 1004.

De la même façon que précédemment, la mesure vibroacoustique 1001 temporelle est transformée en un spectre fréquentiel 1002. Ce spectre fréquentiel est alors découpé en bandes de fréquence. A chaque bande de fréquence, on associe une ou plusieurs grandeurs physiques du spectre fréquentiel. Cela permet de compléter une matrice 1003 associée au pronostic de la classe de vitesse de roulage. Cependant, le découpage en bande de fréquence n'a aucune raison d'âtre semblable à celui réalisé pour le pronostic 1004 de l'état d'usure du pneumatique. L'identification de classe de vitesse 2002 est largement suffisante au niveau du pronostic 1004 de l'état d'usure du pneumatique.

Optionnellement, on peut aussi déterminer l'état de surface météorologique 3001 du sol où roule le véhicule afin de robustifier le procédé d'estimation de l'état d'usure du pneumatique, le pronostic par l'apprentissage automatique 1004 peut prendre en compte aussi cet état météorologique selon deux voies distinctes.

La première voie consiste à déterminer des classes 3002 d'état du sol et de prendre en compte ces classes d'état du sol comme modalité du pronostic 1004 de l'état d'usure du pneumatique. Le fait de connaitre l'état de surface météorologique du sol, au moins en termes de classes, permet de robustifier le pronostic au détriment d'une base d'apprentissage plus conséquente et d'un modèle mathématique plus complexe.

La seconde voie, consiste à déterminer une classe d'état du sol spécifique 3003 pour laquelle le pronostic de l'état d'usure du pneumatique sera effectuée. En fait, on sélectionne parmi l'ensemble des mesures vibroacoustiques 1001 celles qui correspondant à un état du sol favorisant le pronostic 1004 de l'état d'usure du pneumatique. Ainsi, la base d'apprentissage associée au pronostic est réduite et le modèle mathématique plus élémentaire ce qui permet des temps de calculs rapides avec peu de ressources et un pronostic robuste.

L'état de surface météorologique 3001 du sol est séparé en diverses classes. En condition estivale ou normale, on distingue au moins l'état sec, de l'état humide/mouillée, voire on sépare le second groupe selon la hauteur d'eau sur la route. A cela, on peut aussi ajouter les conditions hivernales comme l'état glacé ou l'état enneigé.

Le demandeur a constaté que la classe d'état du sol spécifique doit comprendre l'état dit sec. En effet, cette classe d'état du sol a une forte occurrence dans les mesures vibroacoustiques 2001 et permet d'être plus reproductible sur le découpage en bande de fréquence à l'étape 1003. Ainsi, se concentrer sur les mesures vibroacoustiques où la classe d'état du sol est spécifique n'est pas pénalisant en termes d'occurrence des mesures vibroacoustiques 1001 dans une grande majorité de territoires tout en étant performant en termes de pronostic en raison de la similitude des spectres fréquentiels 1002 pour cette condition météorologique.

Bien entendu, cette prise en compte des classes d'état du sol peut être faite avec ou sans la prise en compte de la vitesse de roulage 2001 dans l'apprentissage automatique 1004. Cependant, la détermination de la classe d'état du sol 3002 sera nécessairement postérieure à la détermination de la classe de vitesse 2002 si on souhaite tout prendre en compte.

Enfin, l'état météorologique du sol 3001 peut être obtenue par des capteurs additionnels du véhicule comme un détecteur de pluie sur le parebrise, ou l'actionneur du déclencheur des essuies glace ou obtenue au travers des informations transitant par le câblage électronique du véhicule. Cependant, dans une variante, la détermination de la classe d'état 3002 du sol est déterminée à l'aide d'une troisième mesure vibroacoustique 1001 obtenue sur le véhicule. Cette troisième mesure vibroacoustique 1001 est avantageusement la mesure vibroacoustique 1001 qui servira au pronostic de l'état d'usure du pneumatique 1004 et/ou la mesure vibroacoustique1004 qui a servi à la détermination 2004 de la classe de vitesse de roulage 2002.

De la même façon que précédemment, la mesure vibroacoustique 1001 temporelle est transformée en un spectre fréquentiel 1002. Ce spectre fréquentiel est alors découpé en bandes de fréquence. A chaque bande de fréquence, on associe une ou plusieurs grandeurs physiques du spectre fréquentiel. Cela permet de compléter une matrice 1003 associée à la détermination de classe d'état météorologique 3002 du sol. Cependant, le découpage en bande de fréquence n'a aucune raison d'être semblable à celui réalisé pour le pronostic 1004 de l'état d'usure du pneumatique ou pour la détermination de la classe de vitesse de roulage 2002. En fait, l'identification de classe d'état du sol 3002 est largement suffisante au niveau du pronostic 1004 de l'état d'usure du pneumatique.

Optionnellement, on peut aussi déterminer la nature 4001 de la texture du sol où roule le véhicule afin de robustifier le procédé d'estimation de l'état d'usure du pneumatique, le pronostic par l'apprentissage automatique 1004 peut prendre en compte aussi des classes de nature du sol selon deux voies distinctes.

La première voie consiste à déterminer des classes 4002 de nature du sol et de prendre en compte ces classes de nature du sol comme modalité du pronostic 1004 de l'état d'usure du pneumatique. Le fait de connaître la nature du sol 4001, au moins en termes de classes, permet de robustifier le pronostic 1004 au détriment d'une base d'apprentissage plus conséquente et d'un modèle mathématique plus complexe.

La seconde voie, consiste à déterminer une classe de nature du sol spécifique 4003 pour laquelle le pronostic 1004 de l'état d'usure du pneumatique sera effectuée. En fait, on sélectionne parmi l'ensemble des mesures vibroacoustiques 1001 celles qui correspondant à une nature du sol favorisant le pronostic 1004 de l'état d'usure du pneumatique. Ainsi, la base d'apprentissage associée au pronostic est réduite et le modèle mathématique plus élémentaire ce qui permet des temps de calculs rapides avec peu de ressources et un pronostic robuste.

La nature du sol 4001 du sol est séparée en diverses classes selon la rugosité à une échelle millimétrique. Cette nature du sol est caractérisée par la PMT.

Le demandeur a constaté que la classe de nature du sol spécifique doit comprendre les sols qualifiés de « ouvert. » En effet, cette classe de permet d'être plus reproductible sur le découpage en bande de fréquence à l'étape 1003. Ainsi, se concentrer sur les mesures vibroacoustiques où la classe de nature du sol est spécifique est performant en termes de pronostic en raison d'une certaine similitude des spectres fréquentiels 1002. Cependant, il est tout à fait possible d'étendre la classe de nature de sol spécifique à tous les sols présentant une PMT supérieure à 0,7, ce qui couvre aussi la partie haute, en matière de PMT, des sols qualifiés de « médium ».

Bien entendu, cette prise en compte des classes de nature du sol peut être faite avec ou sans la prise en compte de la vitesse de roulage 2001 ou de l'état de surface 3001 dans l'apprentissage automatique 1004. Cependant, la prise en compte de la classe de la nature du sol sera nécessairement postérieure à la détermination de la classe de vitesse 2002 si on souhaite prendre en compte ces deux paramètres.

Enfin, la nature du sol 4001 peut être obtenue par des capteurs additionnels du véhicule comme des dispositifs de mesure laser ou sonore ou obtenue au travers des informations transitant par le câblage électronique du véhicule. Cependant, dans une variante, la détermination de la classe de nature du sol 4002 est déterminée à l'aide d'une quatrième mesure vibroacoustique 1001 obtenue sur le véhicule. Cette quatrième mesure vibroacoustique 1001 est avantageusement la mesure vibroacoustique 1001 qui servira au pronostic de l'état d'usure du pneumatique à l'étape 1004 et/ou la mesure vibroacoustique1001 qui a servi à la détermination de la classe de vitesse de roulage 2002 et/ou la mesure vibroacoustique 1001 qui a servi à la détermination de la classe d'état du sol 3002.

De la même façon que précédemment, la mesure vibroacoustique 1001 temporelle est transformée en un spectre fréquentiel 1002. Ce spectre fréquentiel est alors découpé en bandes de fréquence. A chaque bande de fréquence, on associe une ou plusieurs grandeurs physiques du spectre fréquentiel. Cela permet de compléter une matrice 1003 associée à la détermination 4002 de la classe de nature 3002 du sol. Cependant, le découpage en bande de fréquence n'a aucune raison d'être semblable à celui réalisé pour le pronostic 1004 de l'état d'usure du pneumatique ou pour la détermination de la classe de vitesse de roulage 2002 ou pour la détermination de la classe d'état 3002 du sol. En fait, l'identification de classe de nature du sol 3002 est largement suffisante au niveau du pronostic 1004 de l'état d'usure du pneumatique.

Enfin le demandeur a constaté que la prise en compte de l'état météorologique puis de la nature du sol permet de robustifier le pronostic 1004 de l'état d'usure du pneumatique. En effet, le pouvoir séparateur de la classe de l'état du sol étant plus fort que le pouvoir séparateur de la classe de nature du sol.

En conclusion, la prise en compte optionnelle de la classe 3002 d'état du sol et la classe 4002 de nature du sol permet de robustifier le pronostic. La combinaison est la configuration la plus efficace dans l'ordre précité. L'efficacité est mesurée par le taux d'erreur du pronostic.

Cependant, en prenant la voie des classe spécifiques, la méthode gagne en efficience par la taille réduite de la base d'apprentissage du pronostic 1004 de l'état d'usure du pneumatique et la rapidité et la simplicité des calculs qui peuvent être effectués en embarquer et en temps réel sur le véhicule.

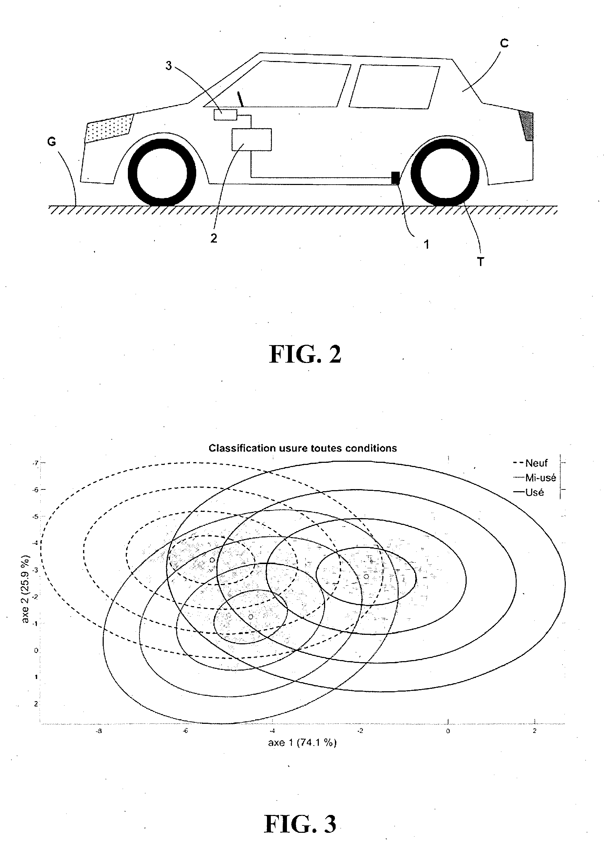

Dans le mode de réalisation principale, on mesure le signal sonore engendré par le pneumatique (T) à l'aide d'un microphone (1) placé dans le véhicule. Sur la Figure 2, le microphone est placé dans la partie avant d'un passage de roue situé à l'arrière du véhicule (C). Toutefois, on peut envisager d'autres emplacements tels que, par exemple, le pare-chocs arrière. Le choix de l'emplacement pour le microphone dépend, par exemple, du type de données qu'on souhaite estimer, du type de véhicule et des contraintes externes liées à son installation, à sa maintenance, et à sa durabilité.

Sur la Figure 2, on visualise un véhicule C roulant sur un sol G, représenté de manière schématique, comprenant des passages de roue avant et arrière dans lesquels sont logées les roues équipées de pneumatiques T.

Lorsque le véhicule C se déplace, le pneumatique T génère un bruit dont l'amplitude et la fréquence dépendent de multiples facteurs. Cette pression sonore est en fait la superposition de bruits d'origines variées tels que les bruits engendrés par la mise en contact des pains de la sculpture avec le sol G, par les mouvements d'air entre les éléments de sculpture, par les particules d'eau soulevées par le pneumatique, ou encore par les écoulements d'air liés à la vitesse du véhicule. L'écoute de ces bruits se superpose également avec les bruits liés à l'environnement du véhicule tels que le bruit du moteur. Tous ces bruits sont également dépendants de la vitesse du véhicule.

Un moyen de mesure, tel qu'un microphone 1 est installé dans le véhicule. On précise ici que différentes positions peuvent être envisagées pour le moyen de mesure, un seul étant montrée sur la figure 1, mais ne limitant pas la portée de l'invention à cette configuration. Ainsi, on peut positionner le capteur sur une paroi du pare-chocs arrière, par exemple mais non nécessairement orienté de façon à détecter un signal sonore provenant de l'arrière du véhicule.

On peut également envisager un positionnement sur une paroi du pare-chocs avant d'un véhicule. On peut également positionner le moyen de mesure dans un passage de roue pour écouter les bruits de roulement aussi près que possible du lieu où ils sont engendrés. Idéalement, on peut considérer que l'installation d'un capteur vibroacoustique dans chacun des passages de roue constitue le meilleur moyen de capter tous les bruits et vibrations de roulage engendrés par les pneumatiques. Toutefois, pour déterminer l'état du sol (état météorologique) et la nature du sol (macro-texture du revêtement), un seul microphone est suffisant. Dans ce dernier cas, il est préférable de l'isoler des bruits aérodynamiques et du moteur.

Bien évidemment, les précautions d'usage sont prises pour protéger le moyen de mesure des agressions extérieures telles que les projections d'eau, de boue ou de gravillons.

Le véhicule comprend également un calculateur 2, relié au moyen de mesure, et configuré pour exécuter les opérations permettant de mettre en forme et d'analyser, comme cela sera décrit en détails par la suite, l'information brute provenant du moyen de mesure, et d'estimer l'état du pneumatique en fonction d'une mesure de l'émission vibroacoustique détectée par le moyen de mesure.

La figure 3 est une visualisation selon l'état d'usure du pneumatique répartie en trois classes de taille identique pour des vitesses de roulage du véhicule comprises entre 20 et 130 km/h. La première classe est la classe d'usure dite « neuf » correspondante à un tiers supérieur de la hauteur utile de la bande de roulement du pneumatique. La hauteur utile étant délimitée par la hauteur maximale de la bande de roulement correspondant à l'extrémité radialement extérieure du pneumatique par rapport à son axe naturel de rotation et la hauteur minimale étant définie par l'extrémité radialement extérieure du témoin d'usure au fond du sillon. La seconde classe dite « mi- usé » correspond au tier médian de la hauteur utile da la bande de roulement. Enfin, la dernière classe dite « usé » correspond au tier inférieur de la hauteur utile de la bande de roulement.

Ici on visualise un ensemble de mesures vibroacoustiques effectués sur véhicule quelles que soit les conditions du véhicule en matière de charge appliquée et pression de gonflage en partant de la configuration nominale sur véhicule. Le véhicule a effectué un circuit routier comprenant un parcours urbain, un parcours sur route de campagne et un parcours autoroutier sur plusieurs séances en saison intermédiaire ce qui permet de mixer toutes les conditions sur l'état de surface du sol, notamment les états du sol dits « sec », « humide » et « mouillé » et sur divers types de nature de surface de sol, notamment des sols dits « fermé », « médium » et « ouvert ». La base d'apprentissage prend en compte comme modalité que l'état d'usure du pneumatique. Les mesures sont faites ici avec des pneumatiques qui ont les trois types d'état d'usure du pneumatique.

L'apprentissage automatique par rapport à ses conditions définit des directions principales de façon mathématique. On visualise sur la figure 3, l'espace discriminant selon les deux premières directions principales qui représentent les deux axes de représentation du graphe. L'apprentissage automatique identifie trois séries de cercles dans cette représentation bidimensionnelle. La première série, représentée par des cercles en pointillé représente les diverses probabilités de l'état d'usure dit « neuf » dans cet espace discriminant bidimensionnel. Les cercles sont concentriques. La probabilité la plus forte, c'est-à-dire supérieure à 0.9, est définie par la surface délimitée par le cercle le plus petit. Puis, le cercle suivant définit une probabilité dégressive de 0.1 soit une valeur de 0.8. Et, le cercle suivant représente une probabilité ayant encore diminuée de 0.1, soit la valeur de 0.7. La seconde série de cercles représentée par des cercles en trait continu gris représente les diverses probabilités de l'état d'usure dit « mi- usé » dans cet espace discriminant bidimensionnel. Enfin, la troisième série de cercles représentée par des cercles en trait continu noir représente de la même façon les diverses probabilités de l'état d'usure dit « usé ». On note que les trois séries de cercles sont globalement disjointes, notamment au niveau de leur petit cercle dit cercle principal ce qui permet de trier les mesures selon les trois états d'usure. Cependant, les cercles sont volumineux et les cercles secondaires ont des recouvrements entre eux. De ce fait, on a une incertitude sur le pronostic fait. Il est possible qu'un pronostic à tort soit fait. Ainsi, en multipliant les mesures, statistiquement on minimise les pronostics à tort dans la totalité des pronostics ce qui permet de déterminer l'état d'usure du pneumatique. Dans cette configuration, il est nécessaire que la série de pronostics N ayant identifié le même état d'usure soit conséquente dans une série M de pronostics importante. Ici, on affecte à chaque mesure un symbole ponctuel. Le symbole rond « o » représente une mesure dont le pronostic indique un pneumatique ayant une usure intermédiaire. Le symbole plus « + » représente une mesure dont le pronostic indique un pneumatique ayant une usure sévère. Enfin le symbole croix « x » représente une mesure dont le pronostic indique un pneumatique à l'état quasi neuf.

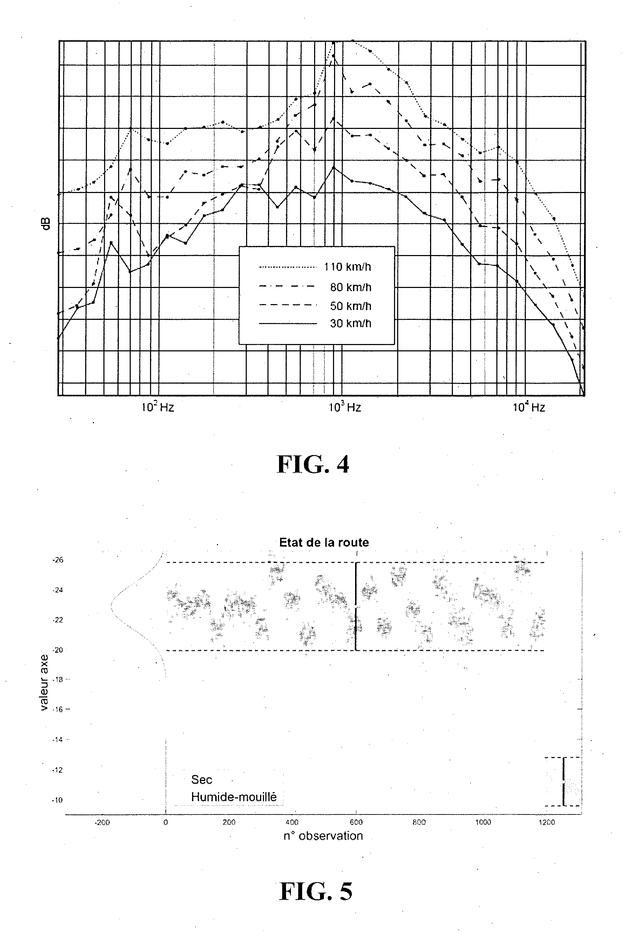

La figure 4 est une représentation spectrale de la puissance sonore enregistrée par le microphone pendant une trame temporelle. On entend ici par trame temporelle l'intervalle de temps, généralement court, pendant lequel on effectue un enregistrement sur la base duquel sont établies les données servant de base à une mesure. Cette trame temporelle est inférieure ou égale à 0,5 secondes ou idéalement inférieure ou égale à 0,25 secondes.

Cette représentation spectrale représente la puissance sonore reçue (en dB) en fonction de la fréquence, sur un intervalle de fréquence donné, typiquement ici, l'intervalle de fréquence audible, compris entre 0 Hz et 20 KHz.

Plus spécifiquement la représentation spectrale de la figure 4 est obtenue en décomposant l'intervalle de fréquence en bandes de fréquence de largeurs prédéterminées, et en affectant à chaque bande de fréquence une valeur caractéristique égale à la puissance moyenne mesurée dans cette bande de fréquence. Ici, un découpage de l'intervalle de fréquence par bandes de tiers d'octave a été employé. Ainsi, chaque point de chacune des courbes de la figure 4 représente une puissance sonore moyenne pour une bande de fréquence donnée et mesurée pendant une trame temporelle dans des conditions de roulage dans lesquelles, toutes choses égales par ailleurs, on ne fait varier que la vitesse de roulage (typiquement de 30kmh à 110kmh).

On observe alors que les courbes représentant les puissances spectrales sont décalées les unes par rapport aux autres, et que la puissance sonore totale dissipée augmente en fonction de la vitesse. Bien que la forme générale des courbes reste similaire, ce qui justifie que ce paramètre ne bouleverse pas systématiquement, le pronostic de l'état d'usure, certaines spécificités du spectre sont plus ou moins marqués ce qui génère du bruit dans le pronostic construit sur ses spectres. La prise en compte de la vitesse de roulage, notamment en termes de classe de vitesses d'environ 30 km/h permet d'améliorer le pronostic de l'état d'usure du pneumatique selon un second mode de réalisation de l'invention.

Ces observations se reproduisent lorsque l'on change une ou plusieurs modalités des autres classes et que l'on compare les courbes obtenues en ne faisant varier que le seul paramètre vitesse.

La figure 5 est une représentation bidimensionnelle d'une série de mesures faites sur véhicule pour un même train de pneumatique, quel que soit son état d'usure et quels que soient ses conditions d'usage sur véhicule au cours d'un trajet sur diverses routes. Cependant, certaines mesures ont été faite sur sol humide ou mouillée en atteste l'activation des essuis glace du véhicule. Cependant, aucune mesure de la hauteur d'eau sur les routes ayant été relevée, le classement de ces mesures est fait selon deux uniques classes : sec et humide/mouillée.

La figure 5 met en exergue l'efficacité du troisième apprentissage automatique du procédé de détermination de l'état de surface du sol, sous forme de classe, à partir d'une mesure temporelle vibroacoustique. Dans un espace discriminant, ici dans une représentation au travers de l'unique vecteur principal, on classe facilement les mesures selon les deux modalités précitées. Le graphe représente pour un ensemble de mesures indexées de 1 à 1290 selon le premier axe du graphe et rangées selon l'indicateur d'activation des essuis glace, la norme du vecteur principal selon l'axe vertical du graphe. On distingue aisément les deux classes d'état du sol, formant deux groupes de mesures, dont les valeurs de la norme du vecteur principal sont fortement différenciées. De plus, on retrouve une notion de distribution gaussienne des mesures autour d'une valeur centrale pour chaque groupe. Ainsi, le pouvoir discriminant de la mesure vibroacoustique selon le troisième apprentissage automatique est vérifiée sur une vecteur principal issus de la mesure vibroacoustique sur véhicule. Bien que certains points soient aberrants, leur nombre limité conduit facilement à déterminer l'état météorologique du sol où circule le véhicule avec une redondance faible de mesure. L'autre solution consiste à ne pas prendre en compte ces points adhérents, puisqu'une incertitude demeure, et à réinitialiser un procédé d'estimation de l'état d'usure du pneumatique.

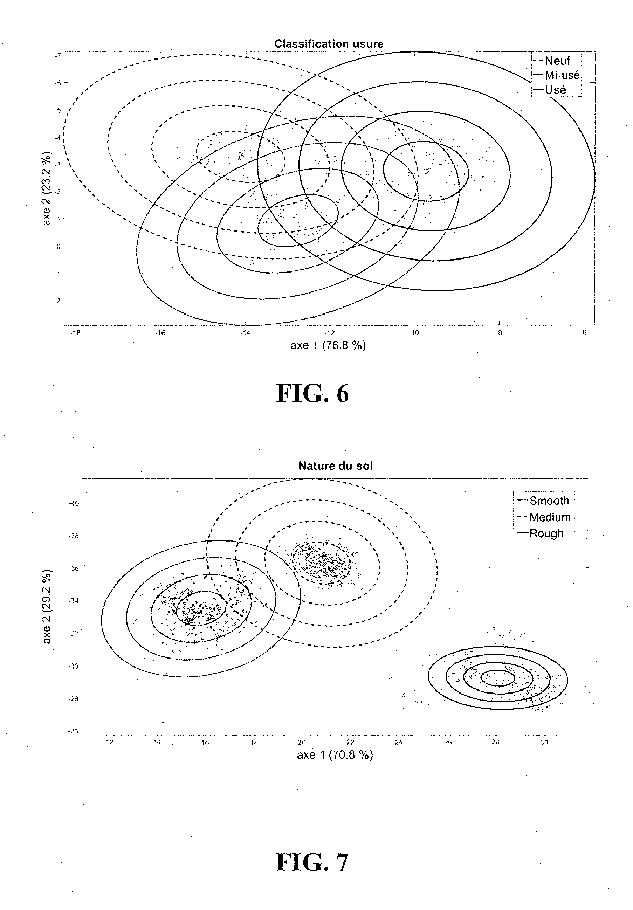

La figure 6 est une visualisation selon l'état d'usure du pneumatique répartie en trois classes de taille identique, la classe dite « neuf », la classe dite « mi- usé » et la classe « usé », pour des vitesses de roulage du véhicule comprises entre 20 et 130 km/h.

Ici on visualise un ensemble de mesures vibroacoustiques effectués sur véhicule quelles que soient les conditions du véhicule en matière de charge appliquée et pression de gonflage en partant de la configuration nominale sur véhicule. Le véhicule a effectué un circuit routier comprenant un parcours urbain, un parcours sur route de campagne et un parcours autoroutier sur plusieurs séances en saison intermédiaire ce qui permet de mixer toutes les conditions sur l'état de surface du sol, notamment les états du sol dits « sec », « humide » et « mouillé » et sur divers types de nature de surface de sol, notamment des sols dits « fermé », « médium » et « ouvert ». La base d'apprentissage prend en compte comme modalité que l'état d'usure du pneumatique mais aussi la classe de vitesse de roulage du véhicule. Les mesures sont faites ici avec des pneumatiques qui ont les trois types d'état d'usure du pneumatique. Cependant, une condition de réalisation du pronostic de l'état d'usure du pneumatique est mise en place sur l'état de surface du sol au travers de la classe d'état du sol spécifique correspondant au sol dit « sec ». Ainsi, si l'état de surface du sol ne correspond pas à la classe d'état du sol spécifique, le pronostic sur l'état d'usure du pneumatique par l'apprentissage automatique n'est pas effectué. Cela écarte un nombre de mesures vibroacoustique mais l'occurrence des mesures sur véhicule est suffisante par rapport à l'évolution temporelle lente de l'usure du pneumatique.

L'apprentissage automatique par rapport à ses conditions définit des directions principales de façon mathématique. On visualise sur la figure 6, l'espace discriminant selon les deux premières directions principales qui représentent les deux axes de représentation du graphe. L'apprentissage automatique identifie trois séries de cercles dans cette représentation bidimensionnelle. La première série, représentée par des cercles en pointillé représente les diverses probabilités de l'état d'usure dit « neuf ». Les cercles sont concentriques les uns par rapport aux autres dans cet espace discriminant bidimensionnel La probabilité la plus forte, c'est-à-dire supérieure à 0.9, est définie par la surface délimitée par le cercle le plus petit. Puis, le cercle suivant définit une probabilité dégressive de 0.1 soit une valeur de 0.8. Et, le cercle suivant représente une probabilité ayant encore diminuée de 0.1, soit la valeur de 0.7. La seconde série de cercles représentée par des cercles en trait continu gris représente les diverses probabilités de l'état d'usure dit « mi- usé » dans cet espace discriminant bidimensionnel. Enfin, la troisième série de cercles représentée par des cercles en trait continu noir représente de la même façon les diverses probabilités de l'état d'usure dit « usé ». On note que les trois séries de cercles sont globalement disjointes, plus que ceux de la figure 3, notamment au niveau de leur plus petit cercle dit cercle principal ce qui permet de trier plus efficacement les mesures selon les trois états d'usure. Cependant, les cercles sont volumineux et les cercles secondaires ont des recouvrements entre eux. De ce fait, on a une incertitude sur le pronostic fait. Il est possible qu'un pronostic à tort soit fait. Ainsi, en multipliant les mesures, statistiquement on minimise les pronostics à tort dans la totalité des pronostics ce qui permet de déterminer l'état d'usure du pneumatique. Ici, le fait d'écarter un certain nombre de mesures vobroacoustiques en raison de la classe d'état de surface du sol, robustifie la méthode en minimisant les pronostics à tort. Dans cette configuration, il est nécessaire que la série de pronostics N ayant identifié le même état d'usure soit conséquente dans une série M de pronostics importante. Ici, on affecte à chaque mesure un symbole ponctuel. Le symbole rond « o » représente une mesure dont le pronostic indique un pneumatique ayant une usure intermédiaire. Le symbole plus « + » représente une mesure dont le pronostic indique un pneumatique ayant une usure sévère. Enfin le symbole croix « x » représente une mesure dont le pronostic indique un pneumatique à l'état quasi neuf.

La figure 7 est une représentation bidimensionnelle d'une série de mesures faites sur véhicule pour des trains de pneumatiques semblables, quel que soit leur état d'usure et quels que soient leurs conditions d'usage sur véhicule au cours des trajets sur diverses routes, et ce quelles que soient les conditions météorologiques. Les routes empruntées sont des pistes d'essai pour véhicule dont la texture du revêtement est régulièrement contrôlée par une mesure du type PMT. Le quatrième apprentissage automatique en prenant en compte que les modalités associées aux classes de nature de sol au nombre de trois, « ouvert », « médium » et « fermé », définit des directions principales caractérisées par des vecteurs. Ici, l'espace discriminant est représentée à l'aide des deux principaux vecteurs pour représenter dimensionnellement l'espace discriminant.

Le quatrième apprentissage automatique identifie trois séries de cercles dans cette représentation bidimensionnelle en lien avec chacune des modalités. La première série, représentée par des cercles en pointillé représente les diverses probabilités de la nature du sol dit « medium ». Les cercles sont concentriques les uns par rapport aux autres dans cet espace discriminant bidimensionnel La probabilité la plus forte, c'est-à-dire supérieure à 0.9, est définie par la surface délimitée par le cercle le plus petit. Puis, le cercle suivant définit une probabilité dégressive de 0.1 soit une valeur de 0.8. Et, le cercle suivant représente une probabilité ayant encore diminuée de 0.1, soit la valeur de 0.7. La seconde série de cercles représentée par des cercles en trait continu gris représente les diverses probabilités de la nature du sol dit « fermé ou lisse » dans cet espace discriminant bidimensionnel. Enfin, la troisième série de cercles représentée par des cercles en trait continu noir représente de la même façon les diverses probabilités de la nature du sol dit « ouvert ou macrorugueux ». On note que les trois séries de cercles sont globalement disjointes, parfaitement entre les classes dites « ouvert » et « fermé », et au minimum au niveau de leur plus petit cercle dit cercle principal ce qui permet de trier les mesures selon les trois natures de sol. Cependant, il demeure une incertitude sur le pronostic fait sur certains points. Il est possible qu'un pronostic à tort soit fait. Ainsi, en multipliant les mesures, statistiquement on minimise les pronostics à tort dans la totalité des pronostics ce qui permet de déterminer la nature du sol suivant les trois classes précitées. Ici, le fait d'écarter un certain nombre de mesures vibroacoustiques en raison de la classe d'état du sol, robustifierait la méthode en minimisant les pronostics à tort. Dans cette configuration, il est nécessaire que la série de pronostics N ayant identifié le même état d'usure soit conséquente dans une série M de pronostics importante. Ici, on affecte à chaque mesure un symbole ponctuel. Le symbole rond « o » représente une mesure dont le pronostic indique un sol dont la nature serait de type medium. Le symbole plus « + » représente une mesure dont le pronostic indique un sol de type lisse ou fermé. Enfin le symbole croix « x » représente une mesure dont le pronostic indique un sol de type macrorugiueux ou ouvert.

La figure 7 met en exergue l'efficacité du quatrième apprentissage automatique du procédé de détermination de la nature du sol à partir d'une mesure temporelle vibroacoustique. Dans l'espace discriminant, ici dans une représentation prenant en compte les deux principales directions, on classe facilement les mesures selon les trois modalités précitées. On identifie par l'apprentissage automatique et on distingue aisément les trois classes de nature du sol, formant trois groupes de mesures, dont les valeurs de la norme des vecteurs principaux sont fortement différenciées notamment pour le premier vecteur. Ainsi, le pouvoir discriminant de la mesure vibroacoustique selon le quatrième apprentissage automatique est validée par cette représentation bidimensionnelle issue de la mesure vibroacoustique sur véhicule. Bien que certains points soient aberrants, leur nombre limité conduit facilement à déterminer la texture du sol où circule le véhicule avec une redondance faible de mesures.

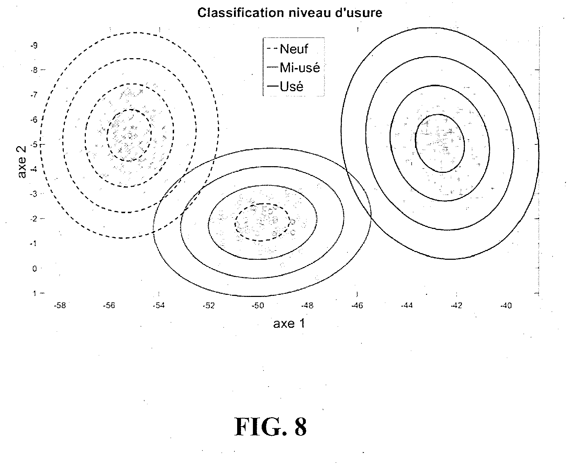

La figure 8 est une visualisation selon l'état d'usure du pneumatique répartie en trois classes de taille identique, la classe dite « neuf », la classe dite « mi- usé » et la classe « usé », pour des vitesses de roulage du véhicule comprises entre 20 et 130 km/h.

Ici on visualise un ensemble de mesures vibroacoustiques effectués sur véhicule quelles que soient les conditions du véhicule en matière de charge appliquée et pression de gonflage en partant de la configuration nominale sur véhicule. Le véhicule a effectué un circuit routier comprenant un parcours urbain, un parcours sur route nationale et un parcours autoroutier sur plusieurs séances en saison intermédiaire ce qui permet de mixer toutes les conditions sur l'état de surface du sol, notamment les états du sol dits « sec », « humide » et « mouillé » et sur divers types de nature de surface de sol, notamment des sols dits « fermé », « médium » et « ouvert ». La base d'apprentissage prend en compte comme modalité que l'état d'usure du pneumatique mais aussi la classe de vitesse de roulage du pneumatique. Les mesures sont faites ici avec des pneumatiques qui ont les trois types d'état d'usure du pneumatique. Cependant, deux conditions de réalisation du pronostic de l'état d'usure du pneumatique sont demandées avant d'entreprendre le pronostic, l'une sur l'état de surface du sol et l'autre sur la nature du sol. Ainsi, si l'état de surface du sol ne correspond pas à la classe d'état du sol spécifique, le pronostic sur l'état d'usure du pneumatique par l'apprentissage automatique n'est pas effectué. De même, si la nature du sol ne correspond pas à la classe de nature du sol spécifique, dont la PMT est supérieure à 0.7, le pronostic sur l'état d'usure du pneumatique par l'apprentissage automatique n'est pas effectué Cela écarte un nombre de mesures vibroacoustique mais l'occurrence des mesures sur véhicule est suffisante par rapport à l'évolution temporelle lente de l'usure du pneumatique.

L'apprentissage automatique par rapport à ses conditions définit des directions principales de façon mathématique. On visualise sur la figure 8, l'espace discriminant selon les deux premières directions principales qui représentent les deux axes de représentation du graphe. L'apprentissage automatique identifie trois séries de cercles dans cette représentation bidimensionnelle. La première série, représentée par des cercles en pointillé représente les diverses probabilités de l'état d'usure dit « neuf ». Les cercles sont concentriques les uns par rapport aux autres dans cet espace discriminant bidimensionnel La probabilité la plus forte, c'est-à-dire supérieure à 0.9, est définie par la surface intérieure délimitée par le cercle le plus petit. Puis, le cercle suivant définit une probabilité dégressive de 0.1 soit une valeur de 0.8. Et, le cercle suivant représente une probabilité ayant encore diminuée de 0.1, soit la valeur de probabilité de 0.7. La seconde série de cercles représentée par des cercles en trait continu gris représente les diverses probabilités de l'état d'usure dit « mi- usé » dans cet espace discriminant bidimensionnel. Enfin, la troisième série de cercles représentée par des cercles en trait continu noir représente de la même façon les diverses probabilités de l'état d'usure dit « usé ». On note que les trois séries de cercles sont globalement disjointes, plus que ceux des figures 3 et figure 6, notamment au niveau de leur plus petit cercle dit cercle principal ce qui permet de trier aisément les mesures selon les trois états d'usure. De ce fait, on a une faible incertitude sur le pronostic fait. Il est possible qu'un pronostic à tort soit fait. Ainsi, en quelques mesures, statistiquement on minimise les pronostics à tort dans la totalité des pronostics ce qui permet de déterminer l'état d'usure du pneumatique. Ici, le fait d'écarter un certain nombre de mesures vibroacoustiques en raison de la classe d'état du sol, et de la classe de nature de sol robustifie la méthode en réduisant les pronostics à tort. Dans cette configuration, il est nécessaire que la série de pronostics N ayant identifié le même état d'usure soit initiée dans une série M de pronostics consécutifs pour statuer sur l'état d'usure. Ici, on affecte à chaque mesure un symbole ponctuel. Le symbole rond « o » représente une mesure dont le pronostic indique un pneumatique ayant une usure intermédiaire. Le symbole plus « + » représente une mesure dont le pronostic indique un pneumatique ayant une usure sévère. Enfin le symbole croix « x » représente une mesure dont le pronostic indique un pneumatique à l'état quasi neuf. Aucun tri à tort dans cet exemple n'est identifié. Enfin, le fait d'avoir choisie des classes dites spécifiques en termes de conditions de réalisation du pronostic permet de limiter les temps de calculs et les ressources de calculs nécessaire avec un apprentissage automatique prenant en compte l'ensemble de ces classes comme modalité de l'apprentissage automatique. Cela revient à minimiser la base d'apprentissage aux seules modalités retenues par l'apprentissage automatique. De plus, cela justifie à moindre coût une exploitation du procédé d'estimation de l'état d'usure du pneumatique en embarqué et en temps réel sur véhicule.

Le demandeur a constaté que prendre en compte une classe de vitesse de roulage spécifique améliore aussi la qualité du pronostic de l'état d'usure du pneumatique. Cependant, le gain en qualité de pronostic est contrebalancé par l'occurrence des mesures vibroacoustiques à moins de définir une classe de vitesse de roulage spécifique large.

Bien entendu, entre la méthode dévoilée à la figure 3 et la méthode dévoilée à la figure 8, il existe plusieurs variantes possibles concernant le rôle d'une classe en alternant à la fois entre le choix entre une modalité de l'apprentissage automatique ou une condition de réalisation du pronostic automatique en définissant des classes spécifiques.

## Revendications

1. Procédé d'estimation de l'état d'usure d'un pneumatique d'un ensemble monté d'un véhicule roulant sur une surface d'une route comprenant les étapes suivantes :
- une mesure d'un signal vibroacoustique (1001) produit par le pneumatique roulant sur la surface de la route pendant une trame temporelle donnée ;
- Transformer le signal temporel (1001) en un signal fréquentiel (1002) sur un intervalle de fréquence donnée ;
- Segmenter l'intervalle de fréquence en au moins deux bandes de fréquence de largeur préalablement prédéterminée et associer à chaque au moins deux bandes de fréquence au moins une donnée représentative du signal fréquentiel dans ladite au moins une bande de fréquence, la au moins une donnée représentative issue de la mesure formant au moins une variable d'une matrice (1003) associée à ladite mesure ;
- Pronostiquer un état d'usure du pneumatique correspondant à la matrice associée à la mesure réalisée, à l'aide d'un apprentissage automatique (1004) des données fondées sur une base d'apprentissage formée d'un ensemble de matrices associées à des mesures enregistrées et réalisées selon les mêmes étapes que ci-dessus, dans des conditions de roulage connues selon des modalités représentant chacune un état d'usure du pneumatique ;
- Déterminer une classe d'état de surface du sol (3002) ; et dans lequel la classe d'état de surface du sol (3002) est une condition de réalisation du pronostic de l'état d'usure du pneumatique par l'apprentissage automatique (1004) si celle-ci est une classe d'état du sol spécifique (3003) contenant la classe d'état de surface du sol dit « sec » ou les classes d'état de surface du sol « sec » et« humide » ;
- Déterminer une classe de nature du sol (4002) ; et dans lequel la classe de nature du sol (4002) est une condition de réalisation du pronostic de l'état d'usure du pneumatique par l'apprentissage automatique (1004) si celle-ci est une classe de nature du sol spécifique (4003) comprenant la classe de nature du sol dit « ouvert » ou macrorugueux, c'est-à-dire dont la profondeur moyenne de texture est supérieure à 1. 1 millimètres ;et
- - Déterminer l'état d'usure du pneumatique (1005) après un nombre N de pronostics identiques dans une série M de pronostics consécutifs.

2. Procédé d'estimation de l'état d'usure d'un pneumatique selon la revendication 1 dans lequel le procédé comprend l'étape suivante :
- Déterminer une classe de vitesse (2002) de roulage du pneumatique dont la largeur est une fraction d'une vitesse de roulage maximale, préférentiellement la vitesse de roulage maximale est de 300 km/h ; et dans lequel la classe de vitesse (2002) de roulage est une modalité de l'apprentissage automatique (1004).

3. Procédé d'estimation de l'état d'usure d'un pneumatique selon la revendication précédente dans lequel la détermination de la classe de vitesse de roulage (2002) du pneumatique comprend les étapes suivantes :
- Enregistrer une seconde mesure d'un signal vibroacoustique (1001) produit par le pneumatique roulant sur la surface de la route pendant une seconde trame temporelle donnée ;
- Transformer le second signal temporel (1001) en un second signal fréquentiel (1002) sur un second intervalle de fréquence donnée ;
- Segmenter le second intervalle de fréquence en au moins deux bandes de fréquence de largeur préalablement prédéterminée et associer à chaque au moins deux bandes de fréquence au moins une donnée représentative du second signal fréquentiel dans ladite au moins une bande de fréquence, la au moins une donnée représentative issue de la seconde mesure formant la au moins une variable d'une matrice (1003) associée à ladite seconde mesure ;
- Déterminer une classe de vitesse de roulage (2002) du pneumatique correspondant à la matrice associée à la seconde mesure réalisée, à l'aide d'un second apprentissage automatique (2004) des données fondées sur une base d'apprentissage formée d'un ensemble de matrices associées à des mesures enregistrées et réalisées selon les mêmes étapes que ci-dessus, dans des conditions de roulage connues selon des modalités représentant chacune à une classe de vitesse de roulage du pneumatique.

4. Procédé d'estimation de l'état d'usure d'un pneumatique selon l'une quelconque des revendications 1 à 3 dans lequel la détermination de la classe d'état de surface du sol (3002) comprend les étapes additionnelles :
- Enregistrer une troisième mesure d'un signal vibroacoustique (1001) produit par le pneumatique roulant sur la surface de la route pendant une troisième trame temporelle donnée ;
- Transformer le troisième signal temporel en un troisième signal fréquentiel (1002) sur un troisième intervalle de fréquence donnée ;
- Segmenter le troisième intervalle de fréquence en au moins deux bandes de fréquence de largeur préalablement prédéterminée et associer à chaque au moins deux bandes de fréquence au moins une donnée représentative du troisième signal fréquentiel dans ladite au moins une bande de fréquence, la au moins une donnée représentative issue de la troisième mesure formant la au moins une variable d'une matrice (1003) associée à ladite troisième mesure ;
- Déterminer une classe d'état de surface du sol (3002) correspondant à la matrice associée à la troisième mesure réalisée, à l'aide d'un troisième apprentissage automatique (3004) des données fondées sur une base d'apprentissage formée d'un ensemble de matrices associées à des mesures enregistrées et réalisées selon les mêmes étapes que ci-dessus, dans des conditions de roulage connues selon des modalités représentant chacune au moins une classe d'état de surface du sol.

5. Procédé d'estimation de l'état d'usure d'un pneumatique selon l'une quelconque des revendications 1 à 4 dans lequel la détermination de la classe de nature du sol (4002) comprend les étapes additionnelles :
- Enregistrer une quatrième mesure d'un signal vibroacoustique (1001) produit par le pneumatique roulant sur la surface de la route pendant une quatrième trame temporelle donnée ;
- Transformer le quatrième signal temporel (1001) en un quatrième signal fréquentiel (1002) sur un quatrième intervalle de fréquence donnée ;
- Segmenter le quatrième intervalle de fréquence en au moins deux bandes de fréquence de largeur préalablement prédéterminée et associer à chaque au moins deux bandes de fréquence au moins une donnée représentative du quatrième signal fréquentiel dans ladite au moins une bande de fréquence, la au moins une donnée représentative issue de la quatrième mesure formant la au moins une variable d'une matrice (1003) associée à ladite quatrième mesure ;
- Déterminer la classe de nature du sol (4002) correspondant à la matrice associée à la quatrième mesure réalisée, à l'aide d'un quatrième apprentissage automatique (4004) des données fondées sur une base d'apprentissage formée d'un ensemble de matrices associées à des mesures enregistrées et réalisées selon les mêmes étapes que ci-dessus, dans des conditions de roulage connues selon des modalités représentant chacune au moins une classe de nature de sol.

6. Procédé d'estimation de l'état d'usure d'un pneumatique selon la revendication précédente en combinaison avec l'une quelconque des revendications 1 à 5 dans lequel l'étape de détermination de la classe de nature du sol comprend la classe d'état de surface du sol (3002) comme modalité du quatrième apprentissage automatique

7. Procédé d'estimation de l'état d'usure d'un pneumatique selon l'une quelconque des revendications précédentes dans lequel au moins l'un des apprentissages automatiques (1004, 2004, 3004, 4004) est compris dans le groupe comprenant les réseaux de neurones, l'analyse discriminante, les machines à vecteur de support, le boosting, les méthodes des k plus proches voisins et la régression logistique.

8. Procédé d'estimation de l'état d'usure d'un pneumatique selon l'une quelconque des revendications précédentes dans lequel l'état d'usure du pneumatique est compris dans le groupe comprenant neuf et usé, préférentiellement aussi mi- usé.

## Patentansprüche

1. Verfahren zur Schätzung des Verschleißzustands eines Reifens einer montierten Einheit eines Fahrzeugs, der auf einer Oberfläche einer Straße fährt, umfassend die folgenden Schritte:
- eine Messung eines vibroakustischen Signals (1001), das von dem auf der Oberfläche der Straße fahrenden Reifen erzeugt wird, während eines gegebenen Zeitrahmens;
- Umwandeln des Zeitsignals (1001) in ein Frequenzsignal (1002) über ein gegebenes Frequenzintervall;
- Segmentieren des Frequenzintervalls in mindestens zwei Frequenzbänder mit vorab vorbestimmter Breite und Zuordnen zu jedem der mindestens zwei Frequenzbänder von mindestens einem Datenelement, das für das Frequenzsignal in dem mindestens einen Frequenzband repräsentativ ist, wobei das mindestens eine repräsentative Datenelement, das aus der Messung stammt, mindestens eine Variable einer Matrix (1003) bildet, die der Messung zugeordnet ist;
- Prognostizieren eines Verschleißzustands des Reifens, der der Matrix entspricht, die der ausgeführten Messung zugeordnet ist, mithilfe eines maschinellen Lernvorgangs (1004) der Datenelemente, die auf einer Lerndatenbank beruhen, die aus einer Menge von Matrizen gebildet wird, die gemäß denselben Schritten wie oben aufgezeichneten und ausgeführten Messungen zugeordnet sind, unter bekannten Fahrbedingungen nach Modalitäten, von denen jede einen Verschleißzustand des Reifens repräsentiert;
- Bestimmen einer Oberflächenzustandsklasse des Bodens (3002); und wobei die Oberflächenzustandsklasse des Bodens (3002) eine Ausführungsbedingung der Prognose des Verschleißzustands des Reifens durch den maschinellen Lernvorgang (1004) ist, wenn diese eine spezifische Zustandsklasse des Bodens (3003) ist, die die als "trocken" bezeichnete Oberflächenzustandsklasse des Bodens oder die Oberflächenzustandsklassen des Bodens "trocken" und "nass" enthält;
- Bestimmen einer Beschaffenheitsklasse des Bodens (4002); und wobei die Beschaffenheitsklasse des Bodens (4002) eine Ausführungsbedingung der Prognose des Verschleißzustands des Reifens durch den maschinellen Lernvorgang (1004) ist, wenn diese eine spezifische Beschaffenheitsklasse des Bodens (4003) ist, die die als "offen" oder makrorau bezeichnete Beschaffenheitsklasse des Bodens, d. h., deren mittleren Texturtiefe mehr als 1,1 Millimeter beträgt, umfasst; und
- Bestimmen des Verschleißzustands des Reifens (1005) nach einer Anzahl N von identischen Prognosen in einer Reihe M von aufeinander folgenden Prognosen.

2. Verfahren zur Schätzung des Verschleißzustands eines Reifens nach Anspruch 1, wobei das Verfahren den folgenden Schritt umfasst:
- Bestimmen eines Fahrgeschwindigkeitsklasse (2002) des Reifens, deren Breite ein Bruchteil einer maximalen Fahrgeschwindigkeit ist, wobei die maximale Fahrgeschwind bevorzugt 300 km/h ist; und wobei die Fahrgeschwindigkeitsklasse (2002) eine Modalität des maschinellen Lernvorgangs (1004) ist.

3. Verfahren zur Schätzung des Verschleißzustands eines Reifens nach dem vorhergehenden Anspruch, wobei das Bestimmen der Fahrgeschwindigkeitsklasse (2002) des Reifens die folgenden Schritte umfasst:
- Aufzeichnen einer zweiten Messung eines vibroakustischen Signals (1001), das von dem auf der Oberfläche der Straße fahrenden Reifen erzeugt wird, während eines gegebenen zweiten Zeitrahmens;
- Umwandeln des zweiten Zeitsignals (1001) in ein zweites Frequenzsignal (1002) über ein gegebenes zweites Frequenzintervall;
- Segmentieren des zweiten Frequenzintervalls in mindestens zwei Frequenzbänder mit vorab vorbestimmter Breite und Zuordnen zu jedem der mindestens zwei Frequenzbänder von mindestens einem Datenelement, das für das zweite Frequenzsignal in dem mindestens einen Frequenzband repräsentativ ist, wobei das mindestens eine repräsentative Datenelement, das aus der zweiten Messung stammt, die mindestens eine Variable einer Matrix (1003) bildet, die der zweiten Messung zugeordnet ist;
- Bestimmen einer Fahrgeschwindigkeitsklasse (2002) des Reifens, die der Matrix entspricht, die der zweiten ausgeführten Messung zugeordnet ist, mithilfe eines zweiten maschinellen Lernvorgangs (2004) der Datenelemente, die auf einer Lerndatenbank beruhen, die aus einer Menge von Matrizen gebildet wird, die Messungen zugeordnet sind, die gemäß denselben Schritten wie oben aufgezeichnet und ausgeführt werden, unter bekannten Fahrbedingungen nach Modalitäten, von denen jede eine Fahrgeschwindigkeitsklasse des Reifens repräsentiert.

4. Verfahren zur Schätzung des Verschleißzustands eines Reifens nach einem der Ansprüche 1 bis 3, wobei das Bestimmen der Oberflächenzustandsklasse des Bodens (3002) die zusätzlichen Schritte umfasst:
- Aufzeichnen einer dritten Messung eines vibroakustischen Signals (1001), das von dem auf der Oberfläche der Straße fahrenden Reifen erzeugt wird, während eines gegebenen dritten Zeitrahmens;
- Umwandeln des dritten Zeitsignals in ein drittes Frequenzsignal (1002) über ein gegebenes drittes Frequenzintervall;
- Segmentieren des dritten Frequenzintervalls in mindestens zwei Frequenzbänder mit vorab vorbestimmter Breite und Zuordnen zu jedem der mindestens zwei Frequenzbänder von mindestens einem Datenelement, das für das dritte Frequenzsignal in dem mindestens einen Frequenzband repräsentativ ist, wobei das mindestens eine repräsentative Datenelement, das aus der dritten Messung stammt, die mindestens eine Variable einer Matrix (1003) bildet, die der dritten Messung zugeordnet ist;
- Bestimmen einer Oberflächenzustandsklasse des Bodens (3002), die der Matrix entspricht, die der dritten ausgeführten Messung zugeordnet ist, mithilfe eines dritten maschinellen Lernvorgangs (3004) der Datenelemente, die auf einer Lerndatenbank beruhen, die aus einer Menge von Matrizen gebildet wird, die Messungen zugeordnet sind, die gemäß denselben Schritten wie oben aufgezeichnet und ausgeführt werden, unter bekannten Fahrbedingungen nach Modalitäten, von denen jede mindestens eine Oberflächenzustandsklasse des Bodens repräsentiert.

5. Verfahren zur Schätzung des Verschleißzustands eines Reifens nach einem der Ansprüche 1 bis 4, wobei das Bestimmen der Beschaffenheitsklasse des Bodens (4002) die zusätzlichen Schritte umfasst:
- Aufzeichnen einer vierten Messung eines vibroakustischen Signals (1001), das von dem auf der Oberfläche der Straße fahrenden Reifen erzeugt wird, während eines gegebenen vierten Zeitrahmens;
- Umwandeln des vierten Zeitsignals (1001) in ein viertes Frequenzsignal (1002) über ein gegebenes viertes Frequenzintervall;
- Segmentieren des vierten Frequenzintervalls in mindestens zwei Frequenzbänder mit vorab vorbestimmter Breite und Zuordnen zu jedem der mindestens zwei Frequenzbänder von mindestens einem Datenelement, das für das vierte Frequenzsignal in dem mindestens einen Frequenzband repräsentativ ist, wobei das mindestens eine repräsentative Datenelement, das aus der vierten Messung stammt, die mindestens eine Variable einer Matrix (1003) bildet, die der vierten Messung zugeordnet ist;
- Bestimmen der Beschaffenheitsklasse des Bodens (4002), die der Matrix entspricht, die der vierten ausgeführten Messung zugeordnet ist, mithilfe eines vierten maschinellen Lernvorgangs (4004) der Datenelemente, die auf einer Lerndatenbank beruhen, die aus einer Menge von Matrizen gebildet wird, die Messungen zugeordnet sind, die gemäß denselben Schritten wie oben aufgezeichnet und ausgeführt werden, unter bekannten Fahrbedingungen nach Modalitäten, von denen jede mindestens eine Bodenbeschaffenheitsklasse repräsentiert.

6. Verfahren zur Schätzung des Verschleißzustands eines Reifens nach dem vorhergehenden Anspruch in Kombination mit einem der Ansprüche 1 bis 5, wobei der Schritt des Bestimmens der Beschaffenheitsklasse des Bodens die Oberflächenzustandsklasse des Bodens (3002) als Modalität des vierten maschinellen Lernvorgangs umfasst.

7. Verfahren zur Schätzung des Verschleißzustands eines Reifens nach einem der vorhergehenden Ansprüche, wobei mindestens einer der maschinellen Lernvorgänge (1004, 2004, 3004, 4004) in der Gruppe enthalten ist, die die neuronalen Netze, die Diskriminanzanalyse, die Support Vector Machines, das Boosting, die Methoden der k nächsten Nachbarn und die logistische Regression umfasst.

8. Verfahren zur Schätzung des Verschleißzustands eines Reifens nach einem der vorhergehenden Ansprüche, wobei der Verschleißzustand des Reifens in der Gruppe enthalten ist, die neu und abgenutzt, bevorzugt auch halb abgenutzt, umfasst.

## Claims

1. A method for estimating the state of wear of a tire of a mounted assembly of a vehicle traveling on a surface of a road, comprising the following steps:
- measuring a vibroacoustic signal (1001) produced by the tire running on the road surface during a given time frame;
- converting the time signal (1001) into a frequency signal (1002) over a given frequency range;
- segmenting the frequency range into at least one frequency band with a predetermined width and associating at least one datum representing the frequency signal in said at least one frequency band with the at least one frequency band, with the at least one representative datum derived from the measurement forming at least one variable of a matrix (1003) associated with said measurement;
- predicting a state of wear of the tire corresponding to the matrix associated with the completed measurement, by means of machine learning (1004) from the data based on a learning database made up of a set of matrices associated with measurements recorded and carried out according to the same steps as above, under known running conditions, according to modalities each representing a state of wear of the tire;
- determining a ground surface state category (3002); and wherein the ground surface state category (3002) is a condition for predicting the state of wear of the tire by the machine learning step (1004) if it is a specific ground state category (3003) containing the "dry" ground surface state category or the "dry" and "wet" ground surface state categories;
- determining a ground nature category (4002); and wherein the ground nature category (4002) is a condition for predicting the state of wear of the tire by the machine learning (1004) if it is a specific ground nature category (4003) comprising the ground nature category referred to as "open"; and
- determining the state of wear of the tire (1005) after a number N of identical predictions in a series M of consecutive predictions.

2. The method for estimating the state of wear of a tire according to claim 1, wherein the method comprises the following step:
- determining a tire running speed category (2002), the breadth of which is a fraction of a maximum running speed, preferably the maximum running speed is 300 km/h; and wherein the running speed category (2002) is a modality of the machine learning (1004).

3. The method for estimating the state of wear of a tire according to the preceding claim, wherein determining the running speed category (2002) of the tire comprises the following steps:
- recording a second measurement of a vibroacoustic signal (1001) produced by the tire running on the road surface during a second given time frame;
- converting the second time signal (1001) into a second frequency signal (1002) over a second given frequency range;
- segmenting the second frequency range into at least two frequency bands with a predetermined width and associating at least one datum representing the second frequency signal in said each of the at least two frequency bands with each of the at least two frequency bands, with the at least one representative datum derived from the second measurement forming the at least one variable of a matrix (1003) associated with said second measurement;
- determining a running speed category (2002) of the tire corresponding to the matrix associated with the second completed measurement, by means of second machine learning (2004) from the data based on a learning database made up of a set of matrices associated with measurements recorded and carried out according to the same steps as above, under known running conditions, according to modalities each representing a running speed category of the tire.

4. The method for estimating the state of wear of a tire according to any one of claims 1 to 3, wherein determining the ground surface state category (3002) comprises the following additional steps:
- recording a third measurement of a vibroacoustic signal (1001) produced by the tire running on the road surface during a given third time frame;
- converting the third time signal into a third frequency signal (1002) over a third given frequency range;
- segmenting the third frequency range into at least two frequency bands with a predetermined width and associating at least one datum representing the third frequency signal in said each of the at least two frequency bands with each of the at least two frequency bands, with the at least one representative datum derived from the third measurement forming the at least one variable of a matrix (1003) associated with said third measurement;
- determining a ground surface state category (3002) corresponding to the matrix associated with the third completed measurement, by means of third machine learning (3004) from the data based on a learning database made up of a set of matrices associated with measurements recorded and carried out according to the same steps as above, under known running conditions, according to modalities each representing at least one ground surface state category.

5. The method for estimating the state of wear of a tire according to any one of claims 1 to 4, wherein determining the ground nature category (4002) comprises the following additional steps:
- recording a fourth measurement of a vibroacoustic signal (1001) produced by the tire running on the road surface during a given fourth time frame;
- converting the fourth time signal (1001) into a fourth frequency signal (1002) over a given fourth frequency range;
- segmenting the fourth frequency range into at least two frequency bands with a predetermined width and associating at least one datum representing the fourth frequency signal in said each of the at least one frequency band with each of the at least one frequency band, with the at least one representative datum derived from the fourth measurement forming the at least one variable of a matrix (1003) associated with said fourth measurement;
- determining the ground nature category (4002) corresponding to the matrix associated with the fourth completed measurement, by means of fourth machine learning (4004) from the data based on a learning database made up of a set of matrices associated with measurements recorded and carried out according to the same steps as above, under known driving conditions, according to modalities each representing at least one ground nature category.

6. The method for estimating the state of wear of a tire according to the preceding claim in combination with any one of claims 1 to 5, wherein the step of determining the ground nature category comprises the ground surface state category (3002) as a modality of the fourth machine learning.

7. The method for estimating the state of wear of a tire according to any one of the preceding claims, wherein at least one of the machine learning methods (1004, 2004, 3004, 4004) is included in the group comprising neural networks, discriminant analysis, support vector machines, boosting, K-nearest neighbors methods and logistic regression.

8. The method for estimating the state of wear of a tire according to any one of the preceding claims, wherein the state of wear of the tire is included in the group comprising new and worn, preferably also half-worn, tires.
